# EUROPEAN PATENT APPLICATION

(11) **EP 4 468 142 A1**
(43) Date of publication of application: **27.11.2024**
(21) Application number: 24175990.1
(22) Date of filing: 15.05.2024
(51) Int. Cl.: G06F 8/65

(54) **HOME APPLIANCE AND METHOD FOR OPERATING THE SAME**

(30) Priority: 22.05.2023 KR 20230065506
(71) Applicant: LG Electronics Inc., Yeongdeungpo-gu Seoul 07336 (KR)
(72) Inventor: HA, Seungwoo, 06772 Seoul (KR); KANG, Namkyu, 06772 Seoul (KR); JANG, Wonyoung, 06772 Seoul (KR); SHIM, Woogon, 06772 Seoul (KR); PHAN, Duy Loc, 06772 Seoul (KR)
(74) Representative: Mooser, Sebastian Thomas

(57) **Abstract**

The present disclosure relates to a home appliance and method for operating the same. The home appliance of the present disclosure includes a first circuit comprising a first memory and a first processor configured to perform load control based on data stored in the first memory; and a second circuit comprising a second memory to store data for a driving mode and a second processor configured to perform the driving mode based on the data stored in the second memory, wherein during a first operation in the driving mode, in response to data for a second operation after the first operation being updated and stored in the second memory, the second processor is configured to perform the updated second operation, based on the data for the second operation updated in the second memory, after the first operation in the driving mode is completed.

## Description

### BACKGROUND

### 1. Field

This disclosure relates to a home appliance, and more particularly, to a home appliance capable of performing an update based on received update data and quickly performing an updated operation during a driving mode, and an operating method thereof.

### 2. Description of the Related Art

A home appliance can be an electric device used in a home, such as a laundry treatment machine, a refrigerator, and an air conditioner.

As the functions of home appliance are advanced, various functions are being added to the home appliance. To this end, a function of downloading data from an external server or the like and updating the data is required.

However, since load control data, safety control data, firmware data, application data, etc. are mixed in the same memory in the home appliance, there is a problem in that data stored in the memory must be collectively updated for updating.

Accordingly, it takes a long time to receive and install the update data, and for this, the update must be performed in a separate period, after a driving mode of the home appliance is terminated.

In addition, it is difficult to selectively update only application data and the like, and furthermore, it is difficult to upgrade new functions.

### SUMMARY

The disclosure has been made in view of the above problems, and can provide a home appliance capable of performing an update based on received update data and quickly performing an updated operation during a driving mode, and an operating method thereof.

Meanwhile, the disclosure can further provide a home appliance capable of efficiently performing an update, and an operating method thereof.

Meanwhile, the disclosure can further provide a home appliance capable of efficiently performing a driving mode, and an operating method thereof.

In accordance with an aspect of the present disclosure, a home appliance can include: a first circuit comprising a first memory and a first processor configured to perform load control based on data stored in the first memory; and a second circuit comprising a second memory to store data for a driving mode and a second processor configured to perform the driving mode based on the data stored in the second memory, wherein during a first operation in the driving mode, in response to data for a second operation after the first operation being updated and stored in the second memory, the second processor is configured to perform the updated second operation, based on the data for the second operation updated in the second memory, after the first operation in the driving mode is completed.

Meanwhile, the second processor is configured to control a load or a valve to perform the first operation, based on first script data stored in the second memory, and control the load or the valve to perform the second operation, based on updated second script data, in response to the second script data stored in the second memory being updated during the first operation.

Meanwhile, in response to first application data being updated and stored in the second memory during operation of the driving mode, the second processor is configured to update the first application, based on the updated first application data during the operation of the driving mode.

Meanwhile, the second memory further stores firmware data, and in response to firmware update data being received and stored in the second memory during operation of the driving mode, the second processor is configured to perform firmware update, after the operation of the driving mode is completed.

Meanwhile, the first memory further stores firmware data, and in response to firmware update data being received and stored in the first memory during operation of the driving mode, the first processor is configured to perform firmware update, after the operation of the driving mode is completed.

Meanwhile, the load control includes a turn-on or turn-off control of a load, or a turn-on or turn-off control of a valve, and the data for the driving mode includes data for operation control of the load or valve.

Meanwhile, the load control includes a turn-on or turn-off control of a load, or a turn-on or turn-off control of a valve, and the data for the driving mode includes data for operation control of the load or valve.

Meanwhile, the second processor is configured to transmit a load-on-signal to the first processor in response to the driving mode starting, and transmit a load-off-signal to the first processor in response to the driving mode being terminated.

Meanwhile, the second memory has a plurality of operation data according to the driving mode, and the plurality of operation data includes script data.

Meanwhile, part of the plurality of script data is updated, and other part is not updated.

Meanwhile, part of the plurality of script data includes complex condition data, variable data, and function call data related to the driving mode.

Meanwhile, it is preferable that the capacity of the second memory is greater than that of the first memory.

Meanwhile, the second circuit can further include a transceiver to perform wireless communication with a server or a mobile terminal.

Meanwhile, the home appliance according to an embodiment of the present disclosure can further include a third circuit having a third processor for controlling a light emitting diode or a display.

Meanwhile, the second processor is configured to control the driving mode based on an operating system, and perform update or upgrade, based on update data received from an external server or mobile terminal.

Meanwhile, the second processor is configured to execute the operating system, execute a framework on the operating system, and execute a system application, data related to the driving mode, or a download application on the framework.

Meanwhile, part of the operating system and the framework corresponds to a common platform.

A home appliance according to another embodiment of the present disclosure can include a first circuit comprising a first memory and a first processor configured to perform a turn-on or turn-off control of a load or valve based on data stored in the first memory; and a second circuit comprising a second memory to store data for a driving mode of the load or valve, and a second processor configured to perform the driving mode based on the data stored in the second memory, wherein during a first operation in the driving mode, in response to data for a second operation after the first operation being updated and stored in the second memory, the second processor is configured to perform the updated second operation, based on the data for the second operation updated in the second memory, after the first operation in the driving mode is completed.

Meanwhile, the second processor is configured to control the load or the valve to perform the first operation, based on first script data stored in the second memory, and control the load or the valve to perform the second operation, based on updated second script data, in response to the second script data stored in the second memory being updated during the first operation.

Meanwhile, the second processor is configured to receive sensing data from the first processor or a sensor device during operation of the driving mode, and perform the driving mode, based on the sensing data.

Meanwhile, the second processor is configured to transmit a turn-on signal of the load or the valve to the first processor in response to the driving mode starting, and transmit a turn-off signal of the load or the valve to the first processor in response to the driving mode being terminated.

A method of operating a home appliance according to an embodiment of the present disclosure includes turning on a load according to a start of a driving mode; performing a first operation of the driving mode; storing update data for a second operation in response to update data for the second operation being received during the first operation of the driving mode; and performing an updated second operation, based on the update data, after the first operation is completed.

### BRIEF DESCRIPTION OF THE DRAWINGS

The above and other objects, features and advantages of the present disclosure will be more apparent from the following detailed description in conjunction with the accompanying drawings, in which:
FIG. 1 is an example of a configuration diagram of a home appliance system including a home appliance according to an embodiment of the present disclosure;
FIGS. 2A to 2D are diagrams illustrating various examples of the home appliance of FIG. 1;
FIG. 3 is an example of an internal block diagram of a mobile terminal of FIG. 1;
FIG. 4A is an example of an internal block diagram of a home appliance related to the present disclosure;
FIG. 4B is another example of an internal block diagram of a home appliance related to the present disclosure;
FIGS. 4C to 4E are diagrams referred to in the description of FIG. 4A or 4B;
FIG. 5 is an example of an internal block diagram of a home appliance according to an embodiment of the present disclosure;
FIGS. 6A to 6C are diagrams referred to in the description of FIG. 5;
FIG. 7A is a perspective view illustrating a laundry treatment machine that is an example of a home appliance according to an embodiment of the present disclosure;
FIG. 7B is a lateral cross-sectional view of the laundry treatment machine of FIG. 7A;
FIG. 7C is an internal block diagram of the laundry treatment machine of FIG. 7A;
FIG. 8A is another example of an internal block diagram of a home appliance according to an embodiment of the present disclosure;
FIG. 9 is a flowchart illustrating a method of operating a home appliance according to an embodiment of the present disclosure; and
FIGS. 10A to 14C are diagrams referred to in the description of FIG. 9.

### DETAILED DESCRIPTION OF THE PREFERRED EMBODIMENTS

Hereinafter, the present disclosure will be described in more detail with reference to the drawings.

The suffixes such as "module" and "unit" can be used to refer to elements or components. Use of such suffixes herein is merely intended to facilitate description of the specification, and the suffixes do not have any special meaning or function. Accordingly, the terms "module" and "unit" can be used interchangeably.

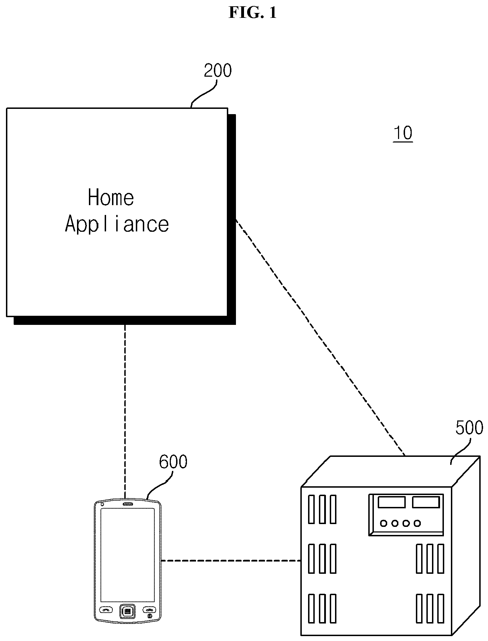

FIG. 1 is an example of a configuration diagram of a home appliance system including a home appliance according to an embodiment of the present disclosure.

Referring to FIG. 1, a home appliance system 10 according to an embodiment of the present disclosure can include a home appliance 200, a mobile terminal 600, and a server 500.

In addition, the home appliance system 10 can further include an access point (AP) device (not shown) for connecting the home appliance 200 to an external network.

The home appliance 200 includes a motor, a magnetron, or a heater, for load control or the like. That is, a load can be a motor, a magnetron, or a heater.

Meanwhile, the home appliance 200 can include an inverter to convert DC power into AC power for efficient load control.

Meanwhile, the home appliance 200 can execute a system application, data related to a driving mode, or a download application therein.

Meanwhile, the mobile terminal 600 can perform wireless communication with the home appliance 200 to remotely control the wirelessly connected home appliance 200, or to receive monitoring data from the home appliance 200.

Meanwhile, the server 500 can provide data to the home appliance 200 connected through a network or the like.

For example, the server 500 can provide update data to the home appliance 200 in response to a request of the mobile terminal 600.

As another example, the server 500 can provide update data to the home appliance 200 when necessary, even when there is no request from the mobile terminal 600 or the home appliance 200.

Meanwhile, the update data can include firmware update data, or software update data related to driving mode, or the like.

The firmware update data can be update data for updating firmware in the home appliance 200.

Meanwhile, the software update data can include upgrade information related to a new driving mode. Based on the upgrade information related to the new driving mode, the driving mode can be upgraded.

Meanwhile, the software update data can further include data related to system applications, driving mode, or update data for download application. Based on such update data, an update of the driving mode can be performed.

The firmware update data can include date data for firmware, an operating system, or a framework. Based on the firmware update data, the firmware can be updated.

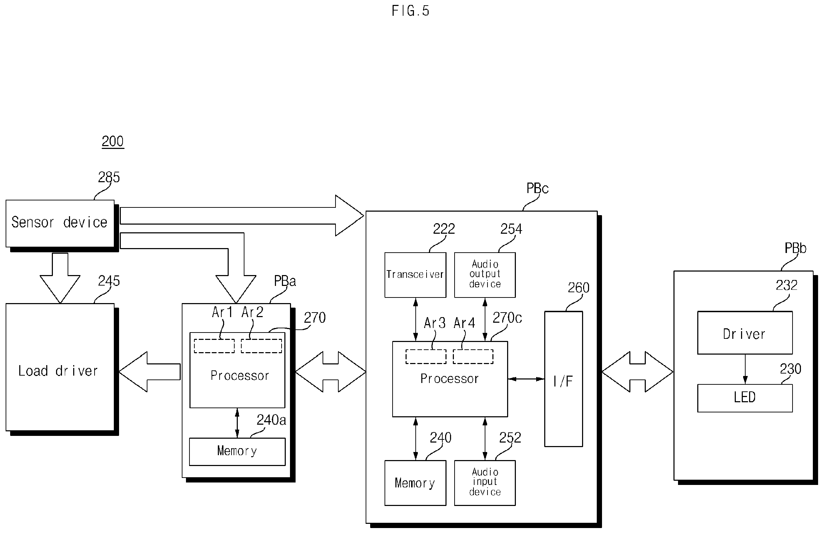

Meanwhile, the home appliance 200 according to an embodiment of the present disclosure includes a first circuit (PBa in FIG. 5) for controlling a load, and a second circuit (PBc in FIG. 5) for controlling a driving mode.

Meanwhile, if data for a second operation after a first operation is updated and stored in a memory (240 in FIG. 5) during the first operation in the driving mode, the processor (270c in FIG. 5) in the second circuit PBc according to an embodiment of the present disclosure is configured to perform an updated second operation, based on data for the second operation updated in the memory 240, after the first operation in the driving mode is completed.

Accordingly, during the driving mode, update can be performed based on received update data and the updated operation can be quickly performed. In addition, the update can be efficiently performed. Furthermore, the driving mode can be efficiently performed due to real-time update of the driving mode.

Meanwhile, the home appliance 200 according to another embodiment of the present disclosure includes a first circuit (PBa in FIG. 5) for controlling the turn-on or off of a load or valve, and a second circuit (PBc FIG. 5) for controlling a driving mode.

Meanwhile, if data for a second operation after a first operation is updated and stored in a memory (240 in FIG. 5) during the first operation in the driving mode, the processor (270c in FIG. 5) in the second circuit PBc according to another embodiment of the present disclosure is configured to perform an updated second operation, based on data for the second operation updated in the memory 240, after the first operation in the driving mode is completed.

Accordingly, during the driving mode, update can be performed based on received update data and the updated operation can be quickly performed. In addition, the update can be efficiently performed. Furthermore, the driving mode can be efficiently performed due to real-time update of the driving mode.

Meanwhile, the mobile terminal 600 can modify or update the driving mode based on a user input while an application for controlling the home appliance 200 is executing.

In addition, the mobile terminal 600 can provide the modified or updated driving mode data to the home appliance 200, after completing the modification or update of the driving mode.

Accordingly, the driving mode can be modified or updated according to user's intention, and based on this, the home appliance 200 can perform the updated driving mode. As a result, a personalized driving mode can be conveniently provided or executed.

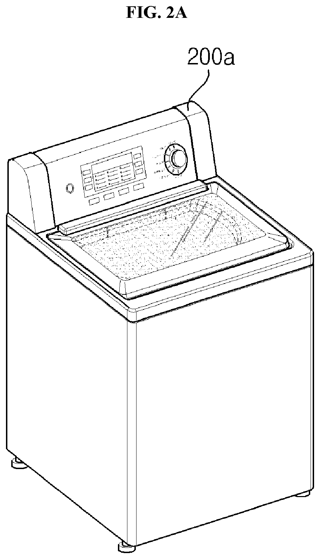

Meanwhile, various examples of the home appliance 200 applied in the present disclosure are possible. This is exemplified through FIGS. 2A to 2D.

FIGS. 2A to 2D are diagrams illustrating various examples of the home appliance of FIG. 1.

FIG. 2A illustrates a laundry treatment machine 200a as an example of a home appliance.

When the home appliance 200 is the laundry treatment machine 200a, the laundry treatment machine 200a can include a washing tub motor (not shown) and an inverter (not shown) for rotating the washing tub motor so as to rotate a washing tub.

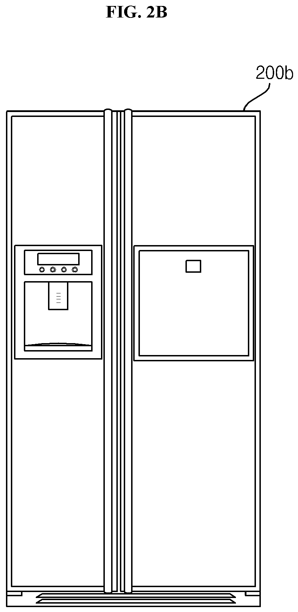

FIG. 2B illustrates a refrigerator 200b as an example of a home appliance.

When the home appliance 200 is the refrigerator 200b, the refrigerator 200b can include a compressor (not shown), a compressor motor (not shown) for operation of the compressor, and an inverter (not shown) for controlling the compressor motor so as to supply cold air into the refrigerator.

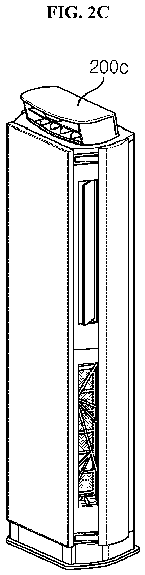

FIG. 2C illustrates an air conditioner 200c as an example of a home appliance.

When the home appliance 200 is the air conditioner 200c, the air conditioner 200c can include a compressor (not shown), a compressor motor (not shown) for operation of the compressor, and an inverter (not shown) for controlling the compressor motor so as to supply cold air from the air conditioner.

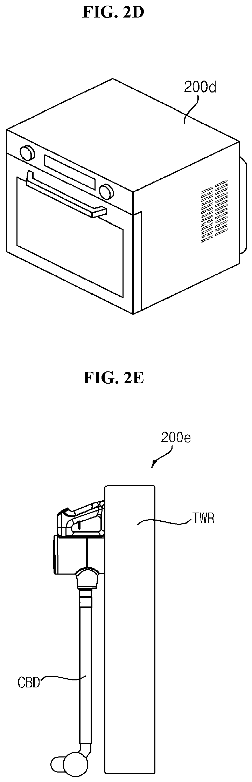

FIG. 2D illustrates a cooking appliance 200d as an example of a home appliance.

When the home appliance 200 is the cooking appliance 200d, the cooking appliance 200d can include a magnetron (not shown) or a light wave heater (not shown) and an inverter (not shown) for controlling the magnetron or light wave heater so as to heat foods in the cooking appliance.

FIG. 2E illustrates a cleaner 200e as an example of a home appliance.

When the home appliance 200 is the cleaner 200e, the cleaner 200e can include a fan motor (not shown) and an inverter (not shown) for controlling the fan motor so as to suck foreign substances inside the cooking appliance.

Meanwhile, according to an embodiment of the present disclosure, various examples of the home appliance 200 such as a laundry treatment machine 200a, a refrigerator 200b, an air conditioner 200c, a cooking appliance 200d, and a cleaner 200e, as well as a dryer, a clothes manager, a robot cleaner, and an air purifier, are possible.

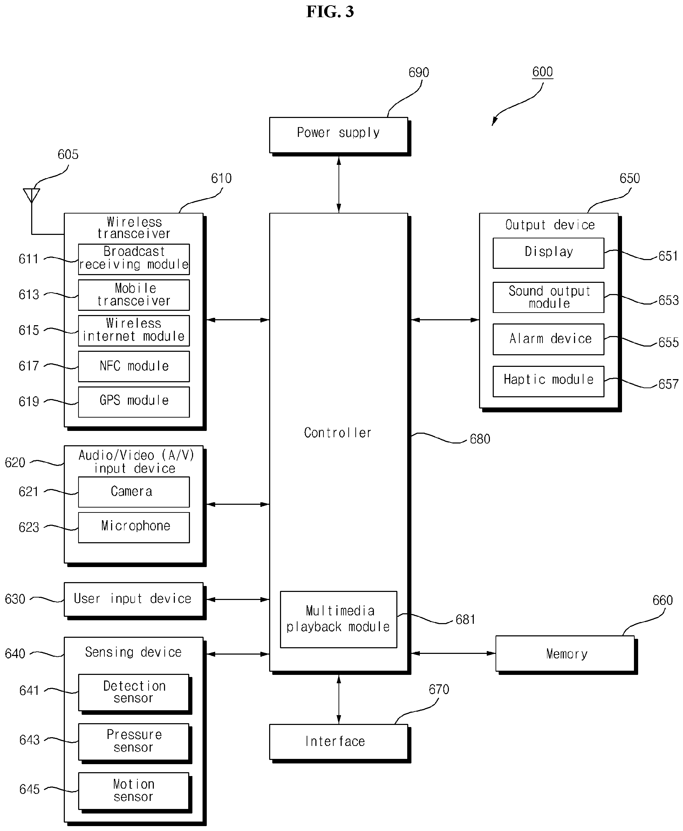

FIG. 3 is an internal block diagram of the mobile terminal of FIG. 1.

Referring to FIG. 3, the mobile terminal 600 can include a wireless transceiver 610, an audio/video (A/V) input device 620, a user input device 630, a sensing device 640, an output device 650, a memory 660, an interface670, a controller 680, and a power supply 690.

Meanwhile, the wireless transceiver 610 can include a broadcast receiving module 611, a mobile communication module 613, a wireless Internet module 615, an NFC module 617, and a GPS module 619.

The broadcast receiving module 611 can receive at least one of a broadcast signal or broadcast related information from an external broadcast management server through a broadcast channel. In this case, the broadcast channel can include a satellite channel, a terrestrial channel, and the like.

The broadcast signal and/or broadcast related information received through the broadcast receiving module 611 can be stored in the memory 660.

The mobile communication module 613 can transmit/receive a wireless signal to and from at least one of a base station, an external terminal, or a server on a mobile communication network. Here, the wireless signal can include a voice call signal, a video call signal, or various types of data according to text/multimedia message transmission/reception.

The wireless Internet module 615 refers to a module for wireless Internet access, and the wireless Internet module 615 can be built-in the mobile terminal 600 or can be externally provided to the mobile terminal. For example, the wireless Internet module 615 can perform WiFi-based wireless communication or WiFi Direct-based wireless communication.

The NFC module 617 can perform near field communication. The NFC module 617 can receive data from a corresponding home appliance or transmit data to the corresponding home appliance, when it approaches within a certain distance from a NFC tag or a home appliance in which the NFC module is mounted, that is, when tagging is performed.

In addition, Bluetooth, Radio Frequency Identification (RFID), infrared data association (IrDA), Ultra Wideband (UWB), ZigBee, and the like can be used as a short-range communication technology.

The Global Position System (GPS) module 619 can receive position information from a plurality of GPS satellites.

The Audio/Video (A/V) input device 620 is for inputting an audio signal or a video signal, and can include a camera 621, a microphone 623, and the like.

The user input device 630 generates key input data input by a user to control the operation of the terminal. To this end, the user input device 630 can include a key pad, a dome switch, a touch pad (pressure/capacitance), and the like. In particular, when the touch pad forms a mutual layer structure with the display 651, it can be referred to as a touch screen.

The sensing device 640 can generate a sensing signal for controlling the operation of the mobile terminal 600 by detecting the current state of the mobile terminal 600, such as the open/closed state of the mobile terminal 600, the location of the mobile terminal 600, and the contact of user.

The sensing device 640 can include a detection sensor 641, a pressure sensor 643, and a motion sensor 645. The motion sensor 645 can detect the movement or location of the mobile terminal 600 by using an acceleration sensor, a gyro sensor, a gravity sensor, or the like. In particular, the gyro sensor is a sensor for measuring angular velocity, and can detect a direction (angle) that is turned with respect to a reference direction.

The output device 650 can include a display 651, a sound output module 653, an alarm device 655, and a haptic module 657.

The display 651 displays and outputs information processed by the mobile terminal 600.

Meanwhile, as described above, when the display 651 and the touchpad form a mutual layer structure to configure a touch screen, the display 651 can also be used as an input device capable of inputting information by a user's touch in addition to the output device.

The sound output module 653 outputs audio data that is received from the wireless transceiver 610 or stored in the memory 660. Such a sound output module 653 can include a speaker, a buzzer, and the like.

The alarm device 655 outputs a signal for notifying the occurrence of an event in the mobile terminal 600. For example, the signal can be output in the form of vibration.

The haptic module 657 generates various tactile effects that a user can feel. A representative example of the tactile effect generated by the haptic module 657 is a vibration effect.

The memory 660 can store a program for processing and controlling the controller 680, and can serve to temporarily store the input or output data (e.g. phone book, message, still image, video, etc.).

The interface670 can serve as an interface with all external devices connected to the mobile terminal 600. The interface670 can receive data or receive power from such an external device and transmit it to each component inside the mobile terminal 600, and can be configured to transmit the data inside the mobile terminal 600 to an external device.

The controller 680 can generally control the overall operation of the mobile terminal 600 by controlling the operation of each of the above components. For example, it can perform related control and processing for voice call, data communication, video call, and the like. In addition, the controller 680 can include a multimedia playback module 681 for multimedia playback. The multimedia playback module 681 can be configured as hardware in the controller 680 or can be configured as software separately from the controller 680.

The power supply 690 can receive external power and internal power under the control of the controller 680 to supply power necessary for the operation of each component.

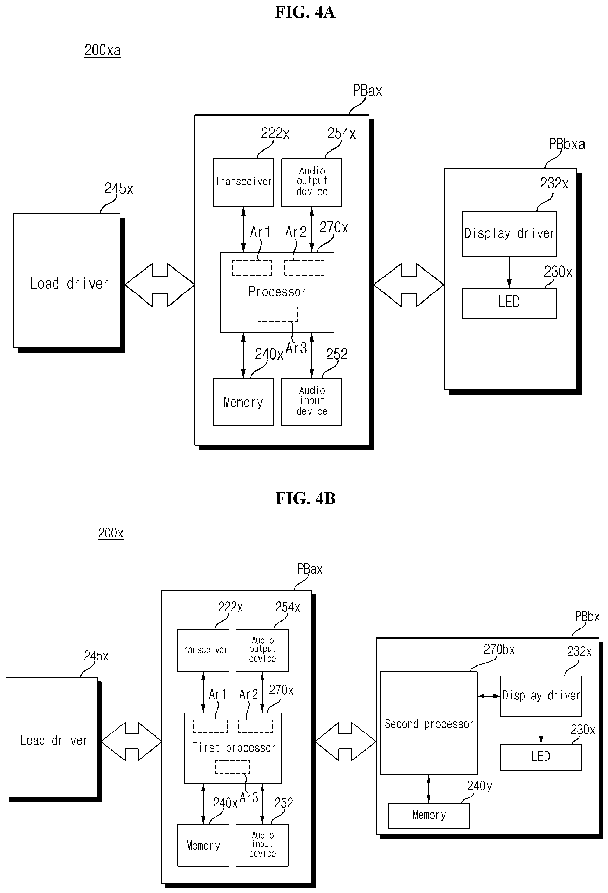

FIG. 4A is another example of an internal block diagram of a home appliance related to the present disclosure.

Referring to FIG. 4A, a home appliance 200xa related to the present disclosure includes a first circuit PBax for load control or safety control, and a second circuit PBbx for light emitting diode control.

Meanwhile, the first circuit PBax can output a load control signal, a safety control signal, or a driving mode control signal to a load driver 245x that operates to drive a load such as a motor or a magnetron.

The first circuit PBax can include a memory 240x for storing data related to a load control signal, a safety control signal, or a driving mode, a first processor 270x for outputting a load control signal, a safety control signal, or a driving mode control signal, a transceiver 222x for performing communication with an external mobile terminal 600 or a server 500, an audio output device 254x for outputting audio, and an audio input device 252 for collecting audio.

Meanwhile, the second circuit PBbxa is connected to the first circuit PBax by wire or wirelessly, and can include a display driver 232x for outputting a light emitting diode driving signal, based on a control signal from the first circuit PBax, in particular, from the first processor 270x, and a light emitting diode 230x for emitting light based on the light emitting diode driving signal.

According to the home appliance 200xa related to the present disclosure, in the memory 240x inside the first circuit PBax, all of firmware, data related to load control, safety control, or driving mode, system application, data related to driving mode, download application, and the like are stored.

Meanwhile, if data update is required in the memory 240x, there must be a free space in the memory 240x, and an address where data is stored must also be identified.

However, since various data are mixed in the memory 240x inside the first circuit PBax, there is a disadvantage that it is difficult to efficiently update data.

For example, when some data in the memory 240x needs to be updated, there is a disadvantage in that all data stored in the memory 240x must be updated. In addition, there is a disadvantage in that it is difficult to perform an upgrade of a new driving mode. In addition, there is a disadvantage that selective update is difficult.

Meanwhile, even though the first processor 270x in the first circuit PBax is the main processor of the home appliance 200xa, it operates based on firmware rather than on the operating system OS. Therefore, there is a disadvantage in that the processing speed is slow in comparison with the processing based on the operating system OS.

FIG. 4B is another example of an internal block diagram of a home appliance related to the present disclosure.

Referring to FIG. 4B, a home appliance 200x related to the present disclosure includes a first circuit PBax for load control or safety control and a second circuit PBbx for controlling a light emitting diode.

The home appliance 200x of FIG. 4B is similar to the home appliance 200xa of FIG. 4A, but there is a difference in that the second circuit PBbx further includes a second processor 270bx and a memory 240y. In the following, the difference is mainly described.

Meanwhile, the second circuit PBbx is connected to the first circuit PBax by wire or wirelessly, and can include a second processor 270bx for outputting a light emitting diode control signal from the first circuit PBax, in particular, based on a control signal from the first processor 270x, a memory 240y for storing data related to the light emitting diode control signal, a display driver 232x for outputting a light emitting diode driving signal based on the light emitting diode control signal, and a light emitting diode 230x for emitting light based on the light emitting diode driving signal.

Meanwhile, since various data are mixed inside the memory 240x inside a first circuit PBax, similarly to the home appliance 200xa of FIG. 4A, there is a disadvantage in that it is difficult to efficiently perform data update.

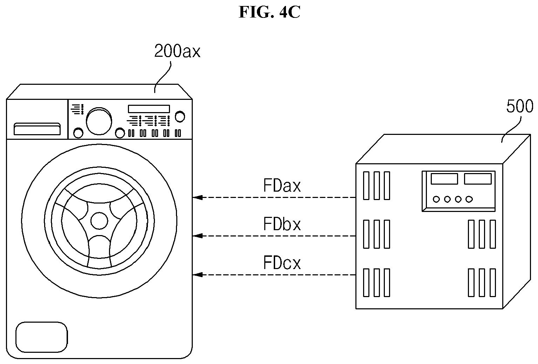

FIGS. 4C to 4E are diagrams referred to in the description of FIG. 4A or 4B.

First, FIG. 4C illustrates that the server 500 transmits various data FDax, FDbx, FDcx to the home appliance 200x.

For example, among the various data FDax, FDbx, FDcx received from the server 500, a first data FDax can be firmware update data or load control update data, a second data FDbx can be an application update data, and a third data FDcx can be display update data.

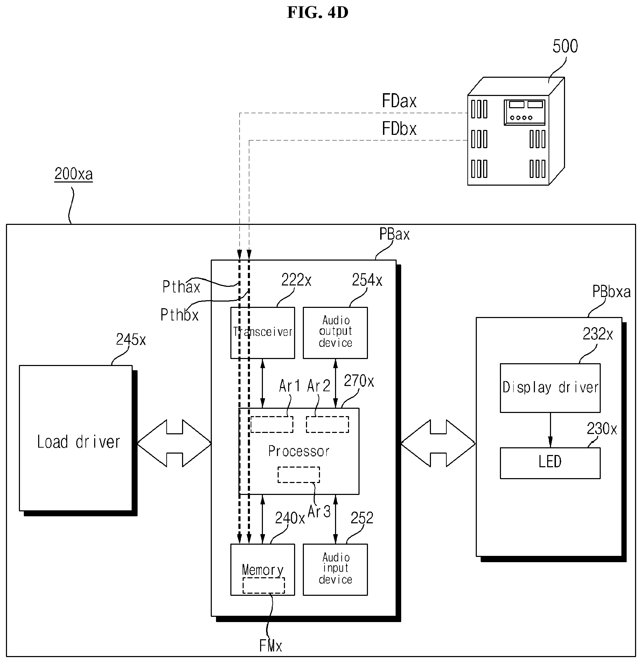

Next, FIG. 4D is a diagram illustrating movement path of various data FDax, FDbx, FDcx received in the home appliance 200x.

Referring to FIG. 4D, when the home appliance 200x receives first data FDax that is firmware update data or load control update data, the first data FDax can be stored in the memory 240x, via the transceiver 222x and the first processor 270x, according to a first path Pthax.

Meanwhile, when the home appliance 200x receives the second data FDbx which is application update data, the second data FDbx can be stored in the memory 240x, via the transceiver 222x and the first processor 270x, according to a second path Pthbx.

Meanwhile, the first processor 270x can execute a firmware in an internal first area Ara, execute a firmware-based application in an internal second area Arb, and execute a firmware-based load control or safety control in an internal third area Arc.

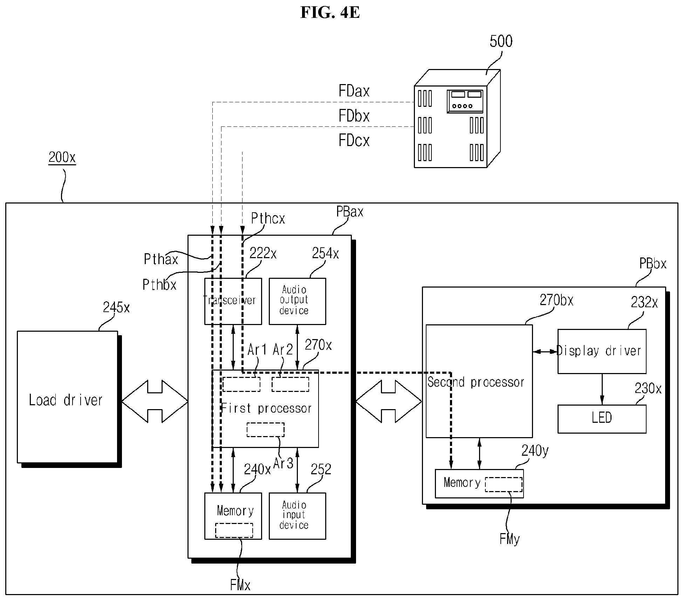

Next, FIG. 4E is a diagram illustrating movement path of various data FDax, FDbx, FDcx received by the home appliance 200x.

Referring to FIG. 4E, the movement path of the data FDax, FDbx, and FDcx of FIG. 4E is similar to the movement path of the data FDax, FDbx of FIG. 4D, but there is a difference in that a third data FDcx is further received in addition to a first data FDax and a second data FDbx.

Meanwhile, when the home appliance 200x receives the third data FDcx which is display update data, the third data FDcx can be stored in the memory 240y, via the transceiver 222x, the first processor 270x, and the second processor 270bx, according to a third path Pthcx.

As shown in FIG. 4D or 4E, since the first data FDax, which is firmware update data or load control update data, and the second data FDbx, which is application update data, are both stored in the memory 240x which is the same memory, there is a disadvantage in that it is difficult to perform data update efficiently.

For example, when an update of some data in the memory 240x is required, in particular, when an application is required to be updated, there is a disadvantage in that all data stored in the memory 240x must be updated. Furthermore, there is a disadvantage in that it is difficult to update or upgrade a new driving mode.

Accordingly, the present disclosure proposes a method for efficiently performing an update or upgrade. In particular, a method for performing personalized update or upgrade is proposed, based on personalized update data or upgrade data. Furthermore, a method for updating the driving mode and immediately applying the updated driving mode during the driving mode is proposed. This will be described with reference to FIG. 5 below.

FIG. 5 is an example of an internal block diagram of a home appliance according to an embodiment of the present disclosure.

Referring to FIG. 5, a home appliance 200 according to an embodiment of the present disclosure includes a first memory 240a, a first circuit PBa having a first processor 270 that performs load control based on data stored in the first memory 240a, a second memory 240 for storing data for the driving mode, and a second circuit PBc having a second processor 270c that performs a driving mode based on data stored in the second memory 240.

When data for a second operation after a first operation is updated and stored in the second memory 240 during the first operation in the driving mode, the second processor 270c is configured to perform the updated second operation, based on data for the second operation updated in the second memory 240, after the first operation in the driving mode is completed.

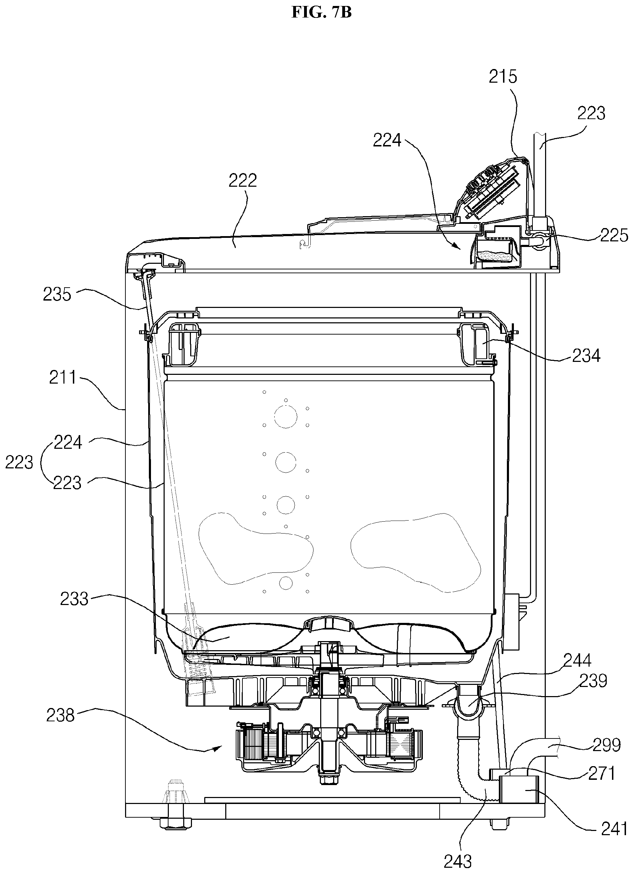

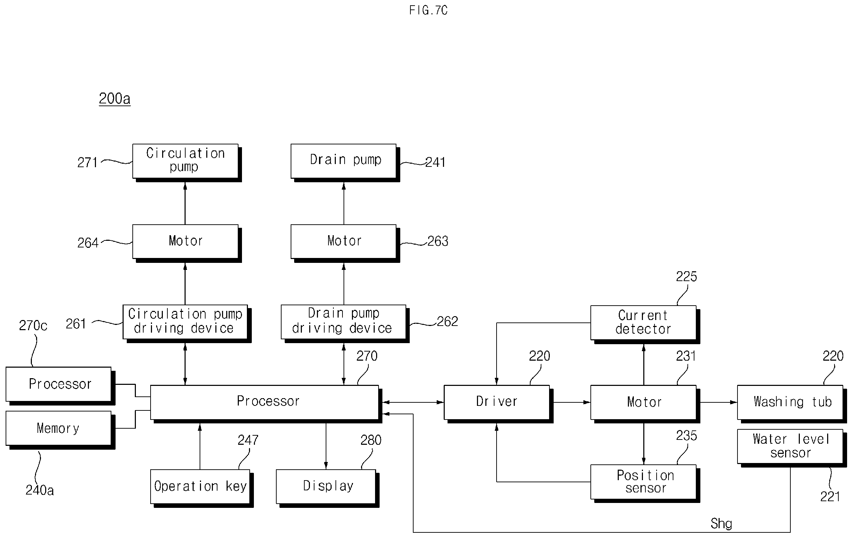

For example, when the home appliance 200 is the laundry treatment machine 200a, after the operation of a water supply valve (225 in FIG. 7B) corresponding to the first operation, 10 times of forward rotation of a motor (231 in FIG. 7C) which is the second operation can be set, and 10 times of reverse rotation can be set.

Meanwhile, during the operation of the water supply valve 225 corresponding to the first operation, the second processor 270c can be configured to store the update data in the second memory 240, based on the received update data, during the operation of the water supply valve 225 corresponding to the first operation, when update data for the second operation corresponding to seven forward rotations and seven reverse rotations of the motor is received from the mobile terminal 600 or the server 500.

Then, after the operation of the water supply valve 225 corresponding to the first operation is completed, the second processor 270c can control to load the update data stored in the second memory 240, and immediately perform the updated second operation.

That is, the second processor 270c can be configured to perform seven forward rotations and seven reverse rotations of the motor, which are the updated second operation, after the operation of the water supply valve 225 corresponding to the first operation.

As another example, when the home appliance 200 is a refrigerator 200b or an air conditioner 200c, after the operation of a refrigerant supply valve (not shown) corresponding to the first operation, a first period operation of a compressor motor (not shown) which is the second operation can be set.

Meanwhile, when update data for a second operation corresponding to a second period operation that is shorter than the first period of a compressor motor (not shown) is received from the mobile terminal 600 or the server 500, during the operation of the refrigerant supply valve (not shown) corresponding to the first operation, the second processor 270c can be configured to store the update data in the second memory 240, based on the received update data, during the operation of the refrigerant supply valve (not shown) corresponding to the first operation.

Then, after completing the operation of the refrigerant supply valve (not shown) corresponding to the first operation, the second processor 270c can load the update data stored in the second memory 240, and control the updated second operation to be performed immediately.

That is, the second processor 270c can be configured to perform the second period operation of the compressor motor (not shown), which is the updated second operation, after the operation of the refrigerant supply valve (not shown) corresponding to the first operation.

As another example, when the home appliance 200 is a cooking appliance 200d, after the operation of a magnetron (not shown) or light wave heater (not shown) corresponding to the first operation, a first period operation of a deodorization motor (not shown), which is the second operation, can be set.

Meanwhile, during the operation of the magnetron (not shown) or light wave heater (not shown) corresponding to the first operation, when update data for the second operation corresponding to a second period operation that is shorter than the first period of a deodorizing motor (not shown) is received from the mobile terminal 600 or the server 500, the second processor 270c can be configured to store the update data in the second memory 240, based on the received update data, during the operation of the magnetron (not shown) or light wave heater (not shown) corresponding to the first operation.

Then, after completing the operation of the magnetron (not shown) or light wave heater (not shown) corresponding to the first operation, the second processor 270c can be configured to load the update data stored in the second memory 240, and perform the updated second operation immediately.

That is, after the operation of the magnetron (not shown) or light wave heater (not shown) corresponding to the first operation, the second processor 270c can be configured to perform the second period operation of the deodorization motor (not shown), which is the updated second operation.

To update the second operation in real time, the second memory 240 according to an embodiment of the present disclosure can store data for the driving mode.

Meanwhile, at least part of the data for the driving mode stored in the second memory 240 can include script data.

Such script data can be classified according to a plurality of operations during the driving mode, and stored in the second memory 240.

Meanwhile, the second memory 240 includes a plurality of operation data according to driving mode, and the plurality of operation data can include script data.

Meanwhile, some of the plurality of script data can be updated, and other parts can not be updated. Accordingly, it is possible to efficiently perform the update.

Meanwhile, some of the plurality of script data can include complex condition data related to the driving mode, variable data, and function call data. Accordingly, it is possible to efficiently perform the driving mode.

Meanwhile, the second processor 270c can control the script data stored in the second memory 240 to sequentially load and execute, during the operation of the home appliance 200.

For example, the second processor 270c is configured to control a load or a valve to perform a first operation, based on first script data stored in the second memory 240.

Meanwhile, when the second script data stored in the second memory 240 is updated during the first operation, the second processor 270c can control the load or valve 225 or 239 to perform the second operation, based on the updated second script data. Accordingly, during the driving mode operation, it is possible to perform an update based on the received update data and quickly perform the updated operation.

Meanwhile, the second memory 240 can store system application data or download application data. At this time, system application data or download application data can be script data.

Meanwhile, when the first application data is updated and stored in the second memory 240 during the operation of the driving mode, the second processor 270c can be configured to update the first application, based on the updated first application data, during the operation of the driving mode. Accordingly, the first application can be updated during the operation of the driving mode.

Meanwhile, the second memory 240 can further store firmware data. At this time, the firmware data can be script data.

Meanwhile, in response to firmware update data being received and stored in the second memory 240 during the operation of the driving mode, the second processor 270c can be configured to perform a firmware update after the operation of the driving mode is completed. Accordingly, it is possible to stably perform the firmware update. Furthermore, it is possible to perform the update efficiently.

Meanwhile, the second memory 240 can separately store driving mode data based on script data, firmware data, and application data. Accordingly, an update method can be changed in response to driving mode data, firmware data, or application data.

Meanwhile, the first memory 240 can store data for a turn-on/off control of load or valve. At this time, the data for the turn-on/off control of load or valve can not be script data.

Meanwhile, the first memory 240a can further store firmware data. At this time, the firmware data can not be script data.

Meanwhile, the first processor 270 performs load control based on data stored in the first memory 240a.

At this time, the load control can include a turn-on/off control of load, or a turn-on/off control of valve.

That is, the first processor 270 can perform a turn-on/off control of motor, a turn-on/off control of valve, and the like, based on data stored in the first memory 240a.

In addition, a plurality of operations in various operating conditions according to the driving mode can be controlled by the second processor 270c.

Thus, a simple load control is performed by the first circuit PBa including the first processor 270 and the first memory 240a, and a driving mode control is performed by the second processor 270c and the second memory 240, thereby efficiently updating or upgrading the driving mode.

In particular, since driving mode data based on script data is stored only in the second memory 240, the driving mode can be efficiently updated.

Meanwhile, since a plurality of operation data according to driving mode, and the like are stored in the second memory 240, the capacity of the second memory 240 is preferably larger than the capacity of the first memory 240a.

Meanwhile, when the second script data stored in the second memory 240 is updated during the first operation, the second processor 270c can control the load or valve (225 or 239) to perform the second operation, based on the updated second script data. Accordingly, during the driving mode operation, it is possible to perform an update based on the received update data and quickly perform the updated operation.

Meanwhile, the second processor 270c can receive sensing data from the first processor 270 or the sensor device 285 during the operation of the driving mode, and can be configured to perform the driving, based on the sensing data. Accordingly, it is possible to stably perform the driving mode based on the sensing data.

Meanwhile, the sensing device 285 can include a water level sensor 221, a position sensor 235, and the like of FIG. 7C.

Meanwhile, the second processor 270c can transmit a turn-on signal of load or valve to the first processor 270, in response to the driving mode starting.

Accordingly, the first processor 270 can be configured to turn on the load or the valve, by controlling a load driver 245, based on the turn-on signal of the load or valve.

Meanwhile, the second processor 270c can transmit a turn-off signal of the load or valve to the first processor 270, in response to the driving mode being terminated.

Accordingly, the first processor 270 can be configured to turn off the load or the valve by controlling the load driver 245, based on the turn-off signal of the load or valve.

As described above, since the second processor 270 is in charge of controlling the driving mode and the first processor 270 is in charge of controlling the load, particularly, of controlling the load driver 245, the driving mode can be efficiently performed.

Meanwhile, the second circuit PBc can further include a transceiver 222 that performs wireless communication with the server 500 or the mobile terminal 600. Accordingly, update data can be received through the transceiver 222 disposed in the second circuit PBc.

Meanwhile, the home appliance 200 according to an embodiment of the present disclosure can further include a third circuit PBb including a third processor 270b for controlling the light emitting diode 230 or the display. Accordingly, the operation of the home appliance 200 can be displayed through the third circuit PBb.

Meanwhile, when a hardware device is additionally installed in the home appliance 200, the second processor 270c can receive upgrade information related to a new driving mode using the additionally installed hardware device from an external server 500 or a mobile device 600, and perform an upgrade for a new driving mode, based on the upgrade information related to the new driving mode.

For example, when the home appliance 200 is the laundry treatment machine 200a and an automatic detergent input device (not shown) is additionally mounted in the laundry treatment machine 200a, the second processor 270c in the laundry treatment machine 200a can receive upgrade information related to a new laundry treatment machine driving mode in which an automatic detergent input mode is set in relation to the automatic detergent input device (not shown), and can perform an upgrade for the new laundry treatment machine driving mode, based on the upgrade information related to the new laundry treatment machine driving mode.

As another example, when the home appliance 200 is the laundry treatment machine 200a, and a new sensor device (not shown) including a spectral sensor, an acceleration sensor, a gyro sensor, a turbidity sensor, and a humidity sensor is input to the laundry treatment machine 200a, the second processor 270c in the laundry treatment machine 200a receives upgrade information related to a new laundry treatment machine driving mode operable based on various sensing data sensed by a sensor device (not shown), and can perform an upgrade for a new laundry treatment machine driving mode, based on the upgrade information related to the new laundry treatment machine driving mode.

As another example, when the home appliance 200 is an air conditioner 200c, and a new sensor device (not shown) including a spectral sensor, an acceleration sensor, a gyro sensor, a dust sensor, a gas sensor, and a humidity sensor is disposed around the air conditioner 200c, the second processor 270c in the air conditioner 200c can receive upgrade information related to a new air conditioner driving mode operable based on various sensing data sensed by a sensor device (not shown), and can perform an upgrade for the new air conditioner driving mode, based on the upgrade information related to the new air conditioner driving mode.

Meanwhile, even if the home appliance 200 is not additionally equipped with a hardware device, when the upgrade information related to a new driving mode in software is received from the external server 500 or the mobile terminal 600, the second processor 270c can perform an upgrade for the new driving mode based on the upgrade information related to the new driving mode.

For example, when the home appliance 200 is the refrigerator 200b and a new rapid cooling driving mode is generated in software, the second processor 270c in the refrigerator 200b can receive upgrade information related to the new rapid cooling driving mode, and perform an upgrade for the new rapid cooling driving mode, based on the upgrade information related to the new rapid cooling driving mode.

As another example, when the home appliance 200 is the cooking appliance 200d and a new rapid thawing driving mode is generated in software, the second processor 270c in the cooking appliance 200d can receive upgrade information related to the new rapid thawing driving mode, and perform an upgrade for the new rapid thawing driving mode, based on the upgrade information related to the new rapid thawing driving mode.

As another example, when the home appliance 200 is the cleaner 200e and a new motor speed variable driving mode is generated in software, the second processor 270c in the cleaner 200e can receive upgrade information related to the new motor speed variable driving mode, and can perform an upgrade for the new motor speed variable driving mode, based on the upgrade information related to the new motor speed variable driving mode.

Accordingly, the home appliance 200 according to an embodiment of the present disclosure can be called as an upgradable home appliance that can be upgraded to a new driving mode, based on a change in hardware or software.

Meanwhile, the home appliance 200 according to an embodiment of the present disclosure can perform an update related to a setting change for an existing driving mode, in addition to an upgrade for a new driving mode.

In this specification, it is described that the upgrade of the driving mode means that a new driving mode is generated to be installed or executed, and the update of the driving mode means that setting or data change is performed for the existing driving mode.

Meanwhile, the first circuit PBa can output a load control signal or a safety control signal to a load driver 245 that operates to drive a load such as a motor or a magnetron.

The load control signal can be divided into a main load control signal for controlling a load, which is a component having the largest power consumption, and a sub load control signal for controlling other components.

For example, the main load can be a laundry treatment machine motor in the case of the laundry treatment machine 200a, can be a compressor motor in the case of the refrigerator 200b and the air conditioner 200c, can be a magnetron or a light wave heater in the case of the cooking appliance 200d, and can be a fan motor in the case of the cleaner 200e.

Meanwhile, the sub-load can be a steam device or a fan motor in the case of the laundry treatment machine 200a, can be a fan motor or a defrost heater in the case of the refrigerator 200b and the air conditioner 200c, and can be a fan motor in the case of the cooking appliance 200d.

Meanwhile, the safety control signal can be a door lock control signal or a shutdown control signal for preventing overheating of motor, in the case of the laundry treatment machine 200a, can be a shutdown control signal for preventing overheating of motor, in the case of the refrigerator 200b and the air conditioner 200c, can be a shutdown control signal for preventing overheating of a magnetron or light wave heater, in the case of the cooking appliance 200d, and can be a shutdown control signal for preventing overheating of motor, in the case of the cleaner 200e.

Meanwhile, the first circuit PBa can be connected to the second circuit PBc by wire or wirelessly, and can output a load control signal, a safety control signal, or a driving mode control signal, based on a control signal from the second circuit PBc, particularly, from the second processor 270c.

Meanwhile, the first circuit PBa includes a first processor 270 for outputting a load control signal, a safety control signal, or a driving mode control signal, and a memory 240a for storing data related to load control, safety control, or driving mode.

Meanwhile, the first processor 270 can output an inverter control signal or an inverter command signal for load control, particularly, for main load control. Accordingly, the load control or safety control can be directly or indirectly performed by using the first processor 270 separated from the second processor 270c.

For example, when the home appliance 200 is the laundry treatment machine 200a, the first processor 270 in the laundry treatment machine 200a can output an inverter control signal or an inverter speed command signal for rotation of the laundry treatment machine motor.

As another example, when the home appliance 200 is the refrigerator 200b, the first processor 270 in the refrigerator 200b can output an inverter control signal or an inverter speed command signal for rotation of the compressor motor.

As another example, when the home appliance 200 is the air conditioner 200c, the first processor 270 in the air conditioner 200c can output an inverter control signal or an inverter speed command signal for rotation of the compressor motor.

As another example, when the home appliance 200 is the cooking appliance 200d, the first processor 270 in the cooking appliance 200d can output an inverter control signal for controlling a magnetron or a light wave heater.

Meanwhile, a sensor device 285 including a temperature sensor and a current sensor can transmit current information to the load driver 245 or the first circuit PBa, and transmit temperature information or the like to the second circuit PBc.

Accordingly, the first circuit PBa can perform load control or safety control based on current information or the like, and the second circuit PBc can generate a driving mode control signal based on temperature information or the like.

Meanwhile, the sensor device 285 can further include a camera or the like, an image signal from the camera or the like can be transmitted to the second circuit PBc, and the second circuit PBc can generate a driving mode control signal based on the image signal from the camera or the like.

Meanwhile, the sensor device 285 is a separate device provided with a plurality of sensors, and can include a spectral sensor, an acceleration sensor, a gyro sensor, a turbidity sensor, and a humidity sensor, and signals sensed by the plurality of sensors can be transmitted to the second circuit PBc, and the second circuit PBc can generate a driving mode control signal based on the plurality of sensing signals.

Meanwhile, the sensor device 285 is a separate device provided with a plurality of sensors, and can include a spectral sensor, an acceleration sensor, a gyro sensor, a dust sensor, a gas sensor, and a humidity sensor, signals sensed by the plurality of sensors can be transmitted to the second circuit PBc, and the second circuit PBc can generate a driving mode control signal based on a plurality of sensing signals.

The second circuit PBc is disposed between the first circuit PBa and the third circuit PBb, and can be connected to the first circuit PBa and the third circuit PBb by wire or wirelessly.

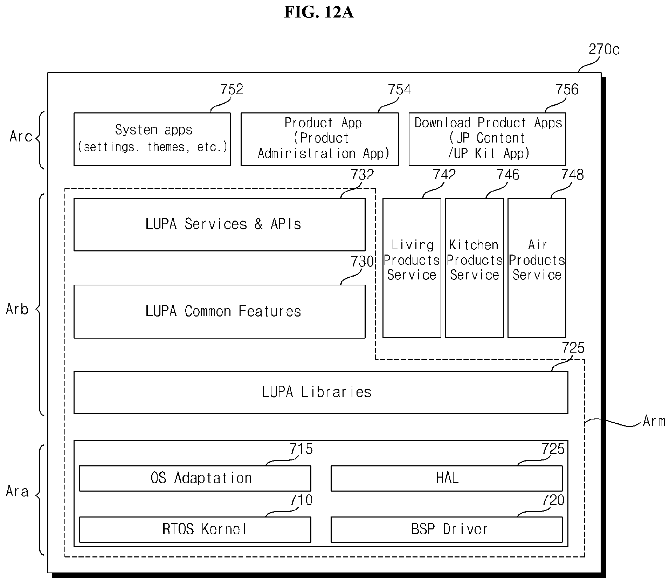

The second circuit PBc can include a second processor 270c that performs driving mode control based on the operating system (710 in FIG. 12A) of the home appliance 200, a memory 240 storing data for operating system 710 and driving mode control, a transceiver 222 that communicates with an external mobile terminal 600 or a server 500, an audio output device 25 that outputs audio, an audio input device 252 for collecting audio, and an interface 260 for inter-processor communication IOC with the first circuit PBa or the third circuit PBb.

Meanwhile, unlike FIG. 4A, the second circuit PBc includes a transceiver 222 for performing wireless communication with the server 500 or the mobile terminal 600, so that an external data can be received or data can be transmitted to the outside through the second circuit PBc.

According to the home appliance 200 of FIG. 5, data related to firmware, load control, or safety control is stored in the memory 240a inside the first circuit PBa, and an operating system OS, a system application, data related to a driving mode, a download application, and the like are stored in the memory 240 inside the second circuit PBc.

That is, unlike FIG. 4B, firmware, data related to load control or safety control, an operating system OS, a system application, data related to a driving mode, a download application, and the like are separately stored.

That is, based on the update data received through the transceiver 222 performing wireless communication with the mobile terminal 600, the update of data related to load control or safety control, and the update of the operating system OS, system application, data related to driving mode, download application, and the like can be separately performed.

Accordingly, during the driving mode operation, it is possible to perform an update based on the received update data and quickly perform the updated operation. Specifically, the update of firmware or the upgrade of driving mode can be efficiently performed by separating the load control driven based on the firmware and the driving mode control executed based on the operating system 710. In particular, an update related to the driving mode can be easily and efficiently performed. In addition, the operating system 710 executed in the second processor 270c can be updated.

Meanwhile, unlike FIG. 4B, since the second processor 270c inside the second circuit PBc operates as a main processor of the home appliance 200, while operating based on the operating system OS rather than on the firmware, there is an advantage in that the operating system (OS)-based processing speed is considerably faster than the firmware-based processing.

Meanwhile, it is preferable that the processing speed of the second processor 270c is higher than that of the first processor 270. Accordingly, the driving mode control executed based on the operating system 710 can be efficiently performed.

Meanwhile, the first circuit PBa or the third circuit PBb can perform a remote procedure call communication with the second circuit PBc, which is an example of inter-processor communication IPC.

That is, the second processor 270c in the second circuit PBc can perform a remote procedure call communication with the second circuit PBc, which is an example of inter-processor communication IPC with the first processor 270 inside the first circuit PBa. Thus, an efficient communication can be performed by using inter-processor communication IPC.

Meanwhile, it is preferable that the memory 240 of the second circuit PBc in FIG. 5 has a larger storage space than the capacity of the memory 240a of the first circuit PBa.

Accordingly, among the update data received from the transceiver 222, update data to be transferred to the memory 240a of the first circuit PBa, not to the memory 240 of the second circuit PBc can be temporarily stored by the memory 240 of the second circuit PBc, and then transferred to the memory 240a of the first circuit PBa. Accordingly, the update can be efficiently performed.

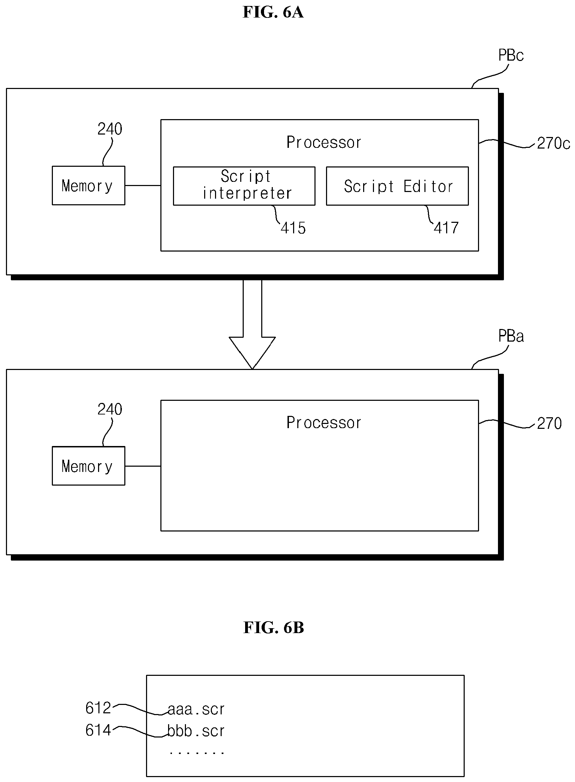

FIGS. 6A to 6C are diagrams referred to in the description of FIG. 5.

First, the diagrams are referred to for describing operations of the second circuit PBc and the first circuit PBa.

Referring to the drawing, the second memory 240 in the second circuit PBc stores script data related to the driving mode.

The second processor 270c can include an interpreter 515 for interpreting script data and an editor 417 for editing script data.

For the first operation in the driving mode, the second processor 270c reads a first script data related to the first operation inside the second memory 240, interprets or analyzes it in the interpreter 515, and transmits a control signal related to the first operation to the second processor 270.

Accordingly, the second processor 270 can control the turn-on operation of the load or valve, based on the control signal related to the first operation.

Meanwhile, the second processor 270c can control to edit the script data stored in the second memory 240 and store the edited script data, according to a user input or the like.

For example, if there is a driving time reduction input, based on a user input through the user input device of the home appliance 200, the editor 417 controls to shorten a first period set in the driving mode to a second period and edit, and store the edited script data in the second memory 240.

FIG. 6B illustrates a plurality of script data 612 and 614 stored in the second memory 240.

The plurality of script data can be related to the driving mode, and can be edited by user input or the like, or updated by update data from the mobile terminal 600 or the server 500.

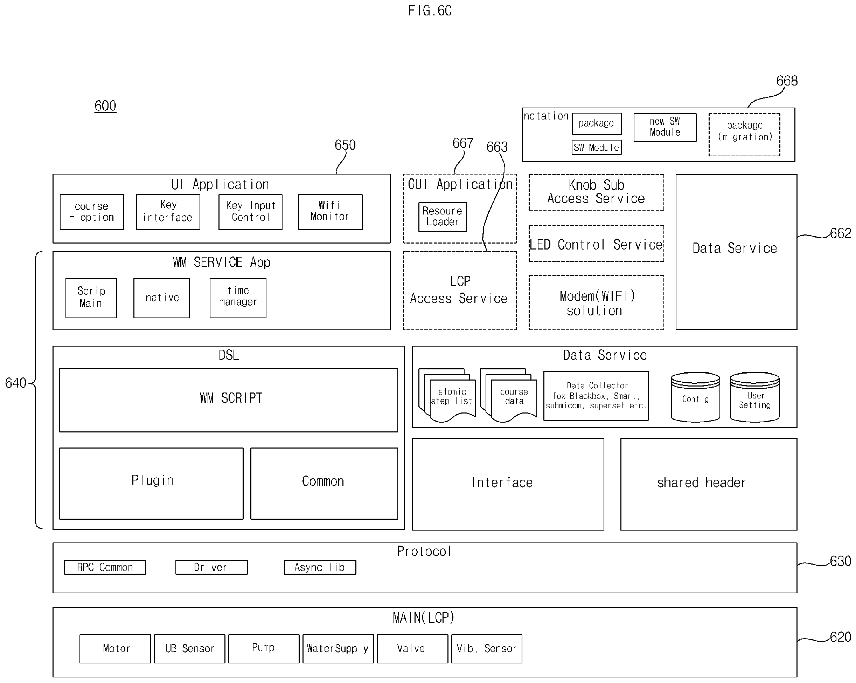

FIG. 6C is an example of a system configuration of a home appliance for performing driving mode based on script data.

Referring to the drawing, the second processor 270c can execute a device driver 620 for driving devices such as a motor, sensor, pump, water supply valve, and the like.

Meanwhile, the second processor 270c can execute a protocol 630 on the device driver 620, execute a framework 640 on the protocol 63, and execute an application 650, 667, various services 663, 662, 668, and the like on the framework 640.

The second memory 240 can store data related to each of the device driver 620, the framework 640, the application 650, 667, and various services 663, 662, and 668.

At this time, the data of the framework 640, the application 650, 667, and various services 663, 662, and 668 can be script data and, as described above, can be updated during the driving mode.

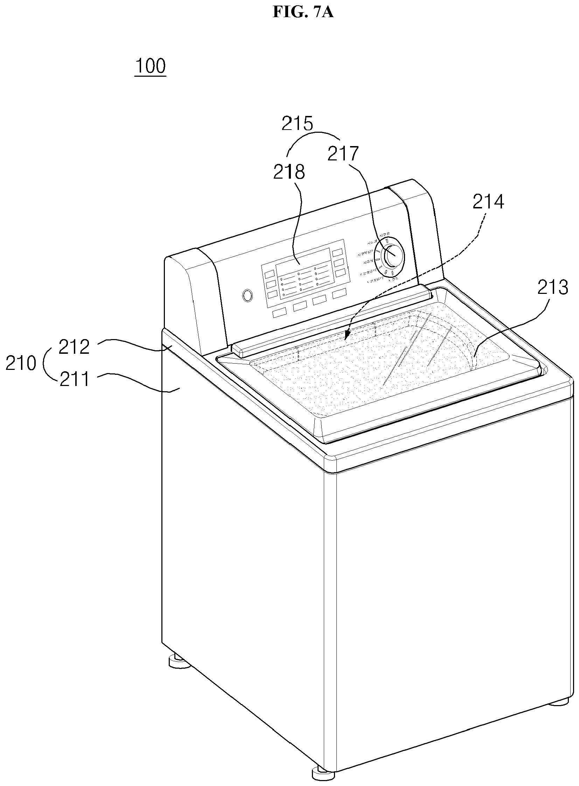

FIG. 7A is a perspective view illustrating a laundry treatment machine that is an example of a home appliance according to an embodiment of the present disclosure, and FIG. 7B is a lateral cross-sectional view of the laundry treatment machine of FIG. 7A.

Referring to FIGS. 7A and 7B, the laundry treatment machine 200 according to an embodiment of the present disclosure is a concept of including a washing machine that performs washing, rinsing, and spin-dry by inserting laundry, a dryer that performs drying by inserting wet laundry, and the like. Hereinafter, the washing machine is mainly described.

The laundry treatment machine 200a includes a casing 210 forming an outer shape, a control panel 215 which includes operating keys for receiving various control commands from a user and a display for displaying information related to an operating state of the laundry treatment machine 200a and provides a user interface, and a door 213 which is rotatably disposed in the casing 210 to open and close an entry/exit hole through which laundry enters and exits.

The casing 210 can include a main body 211 forming a space in which various components of the laundry treatment machine 200a can be accommodated, and a top cover 212 that is provided on the upper side of the main body 211 and forms a laundry entry/exit hole so that laundry can be loaded into an inner tub 223.

It is described that the casing 210 includes the main body 211 and the top cover 212, but it is sufficient that the casing 210 forms the outer shape of the laundry treatment machine 200a, and it is not limited thereto.

Meanwhile, it is described that a support bar 235 is coupled to the top cover 212 which is one of the components constituting the casing 210, but it is not limited thereto, and it should be noted that it is possible to be coupled to any fixed portion of the casing 210.

The control panel 215 includes operating keys 217 for operating the driving state of the laundry treatment machine 200, and a display 280 disposed in one side of the operating keys 217 to display the driving state of the laundry treatment machine 200.

The door 213 opens and closes a laundry entry/exit hole (not shown) formed in the top cover 212, and can include a transparent member such as tempered glass so that the inside of the main body 211 can be seen.

The laundry treatment machine 200a can include a washing tub 220. The washing tub 220 can include an outer tub 224 containing washing water and an inner tub 223 rotatably provided within the outer tub 224 to accommodate laundry. A balancer 234 for compensating an eccentricity generated when the washing tub 220 rotates can be provided in an upper portion of the washing tub 220.

Meanwhile, the laundry treatment machine 200a can include a pulsator 233 rotatably provided in a lower portion of the washing tub 220.

A driving device 238 provides a driving force for rotating the inner tub 223 and/or the pulsator 233. A clutch (not shown) can be provided to selectively transmit the driving force of the driving device 238 so that only the inner tub 223 rotates, only the pulsator 233 rotates, or both the inner tub 223 and the pulsator 233 rotate simultaneously.

Meanwhile, the driving device 238 is operated by the driver 220 of FIG. 7C, i.e., a driving circuit. This will be described later with reference to FIG. 7C and below.

Meanwhile, the top cover 212 is provided with a detergent box 214 that accommodates various additives such as laundry detergent, fabric softener, and/or bleach in a withdrawable manner, and washing water supplied through a water supply passage 223 is supplied into the inner tub 223 after passing through the detergent box 214.

A plurality of holes (not shown) are formed in the inner tub 223 and the washing water supplied to the inner tub 223 flows to the outer tub 224 through a plurality of holes. A water supply valve 225 for regulating the water supply passage 223 can be provided.

Washing water in the outer tub 224 is drained through a drain passage 243, and a drain valve 239 that regulates the drain passage 243 and a drain pump 241 that pumps the washing water can be provided.

In addition, a circulation pump 271 for pumping washing water can be provided in a distal end of the drain passage 243. Washing water pumped by the circulation pump 271 can be put back into the washing tub 220 through a circulation passage 244.

The support bar 235 is for suspending the outer tub 224 within the casing 210, and has one end connected to the casing 210, and the other end connected to the outer tub 224 by the suspension 250.

The suspension 250 dampens the vibration of the outer tub 224 during operation of the laundry treatment machine 200a. For example, the outer tub 224 can vibrate due to vibration generated as the inner tub 223 rotate, and the suspension 250 can dampen vibration caused by various factors such as the eccentricity of the laundry received in the inner tub 223, the rotational speed of the inner tub 223, or resonance characteristics, while the inner tub 223 is rotating.

FIG. 7C is an internal block diagram of the laundry treatment machine of FIG. 7A.

Referring to FIG. 7C, in the laundry treatment machine 200, the driver 220 is controlled by the control operation of the first processor 270 or the second processor 270c, and the driver 220 drives a motor 231. Accordingly, the washing tub 220 is rotated by the motor 231.

Meanwhile, the laundry treatment machine 200 can include a drain motor 263 for driving the drain pump 241 and a drain pump driving device 262 for driving the drain motor 263. The drain pump driving device 262 can be controlled by the first processor 270 or the second processor 270c.

Meanwhile, the laundry treatment machine 200 can include a motor 264 for driving the circulation pump 271 and a circulation pump driving device 261 for driving the motor 264. The circulation pump driving device 261 can be controlled by the first processor 270 or the second processor 270c.

The first processor 270 or the second processor 270c operates by receiving an operation signal from the operation key 217. Accordingly, washing, rinsing, and spin-drying processes can be performed.

In addition, the first processor 270 or the second processor 270c can control the display 280 to display a washing course, washing time, spin-drying time, rinsing time, or the like, or a current operating state.

Meanwhile, the first processor 270 or the second processor 270c controls the driver 220 to operate the motor 231. For example, it can control the driver 220 so that the motor 231 rotates, based on a current detector 225 for detecting the output current flowing in the motor 231 and a position sensor 220 for sensing the position or a rotor of the motor 231. In the drawing, the detected current and the sensed position signal are shown as being input to the driver 220, but not limited thereto, and can be input to the first processor 270 or the second processor 270c, or can be input to the first processor 270 or the second processor 270c and the driver 220 together.

The driver 220 is for driving the motor 231, and can include an inverter (not shown) and an inverter controller (not shown). In addition, the driver 220 can be a concept that further includes a converter or the like that supplies DC power input to an inverter (not shown).

For example, when an inverter controller (not shown) outputs a pulse width modulation (PWM)-based switching control signal to an inverter (not shown), the inverter (not shown) performs a high-speed switching operation to supply AC power of a certain frequency to the motor 231.

Meanwhile, the first processor 270 or the second processor 270c can detect the amount of laundry, based on the current io detected by the current detector 220 or the position signal H detected by the position sensor 235. For example, while the washing tub 220 rotates, the amount of laundry can be detected based on the current value io of the motor 231.

Meanwhile, the first processor 270 or the second processor 270c can detect the amount of eccentricity of the washing tub 220, i.e., the unbalance of the washing tub 220 (UB). The detection of the amount of eccentricity can be performed, based on the ripple component of the current io detected by the current detector 225 or the rotational speed change amount of the washing tub 220.

Meanwhile, the water level sensor 221 can measure the water level in the washing tub 220.

For example, a water level frequency of an empty water level in the washing tub 220 can be 28 KHz, and a full water level frequency at which water reaches an allowable water level in the washing tub 220 can be 23 KHz.

That is, the water level frequency detected by the water level sensor 221 can be in inverse proportion to the water level in the washing tub.

Meanwhile, the washing tub water level Shg output from the water level sensor 221 can be a water level frequency or a water level in inverse proportion to the water level frequency.

Meanwhile, the first processor 270 or the second processor 270c can determine whether the washing tub 220 has a full water level, an empty water level, or a reset water level, based on the water level Shg of washing tub detected by the water level sensor 221.

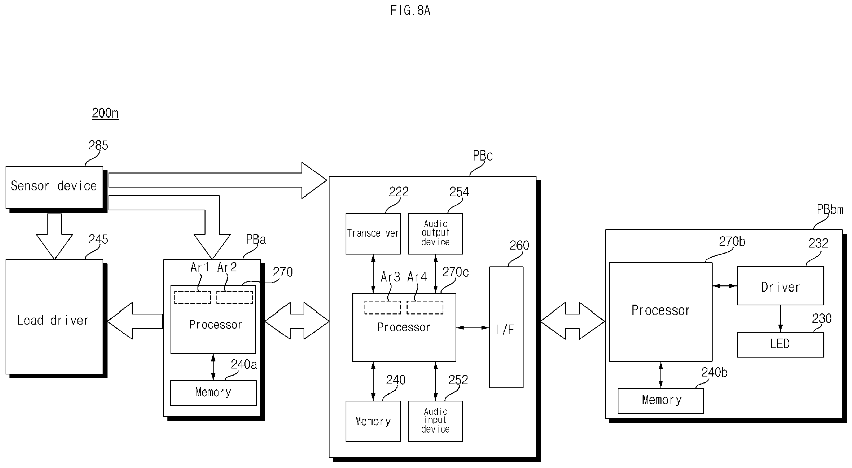

FIG. 8A is another example of an internal block diagram of a home appliance according to an embodiment of the present disclosure.

Referring to the drawing, the home appliance 200m of FIG. 8A, similar to the home appliance 200 of FIG. 5, includes a first circuit PBa, a second circuit PBc, and a third circuit PBbm.

Operations of the first circuit PBa and the second circuit PBc are the same as those of the first circuit PBa and the second circuit PBc of FIG. 5, except that the third circuit PBbm includes the processor 270b and the memory 240b.

The third circuit PBbm can include a third processor 270b that is connected to the second circuit PBc by wire or wirelessly and outputs a light emitting diode control signal, based on a control signal from the second circuit PBc, particularly, from the second processor 270c, a memory 240b for storing data related to the light emitting diode control signal, a display driver 232 that outputs a light emitting diode driving signal based on the light emitting diode control signal, and a light emitting diode 230 that emits light based on the light emitting diode driving signal.

Meanwhile, the first circuit PBa or the third circuit PBb can perform a remote procedure call communication with the second circuit PBc, which is an example of inter-processor communication IPC.

That is, the second processor 270c in the second circuit PBc can perform a remote procedure call communication with the second circuit PBc, which is an example of inter-processor communication (IPC) with the first processor 270 in the first circuit PBa or the third processor 270b in the third circuit PBb. Thus, an efficient communication can be performed by using inter-processor communication (IPC).

Meanwhile, it is preferable that the memory 240 of the second circuit PBc in FIG. 8A has a larger storage space than the storage space of the memory 240a of the first circuit PBa or the memory 240b of the third circuit PBbm.

Accordingly, among the update data received from the transceiver 222, update data to be transferred to the memory 240a of the first circuit PBa or the memory 240b of the third circuit PBbm, not to the memory 240 of the second circuit PBc can be temporarily stored by the memory 240 of the second circuit PBc, and then transferred to the memory 240a of the first circuit PBa or the memory 240b of the third circuit PBbm. Accordingly, the update can be efficiently performed.

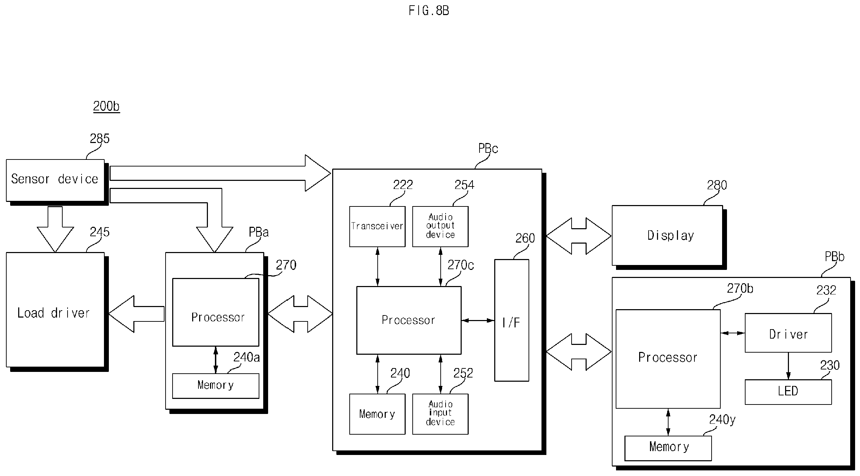

FIG. 8B is another example of an internal block diagram of a home appliance according to an embodiment of the present disclosure.

Referring to FIG. 8B, a home appliance 200b according to an embodiment of the present disclosure is similar to the home appliance 200m of FIG. 8A, but there is a difference in that a separate display 280 is further provided in addition to the light emitting diode 230.

The separate display 280 can be an LCD display, an OLED display, or the like.

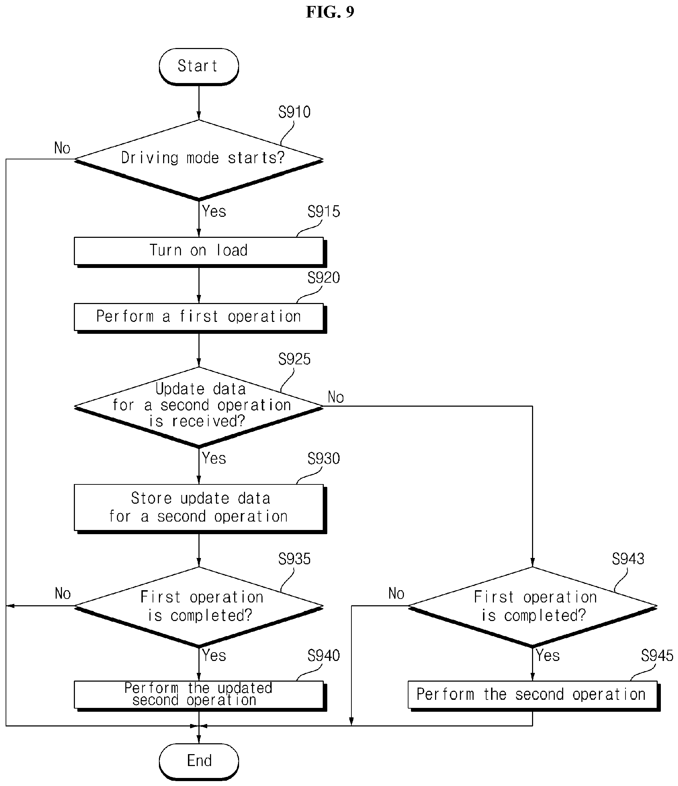

FIG. 9 is a flowchart illustrating a method of operating a home appliance according to an embodiment of the present disclosure.

Referring to FIG. 9, the second processor 270c of the home appliance 200 according to an embodiment of the present disclosure determines whether the driving mode starts (S910) and, if applicable, is configured to turn on the load (S915).

For example, meanwhile, the second processor 270c can transmit a load-on-signal to the first processor 270, in response to the driving mode starting. Accordingly, the first processor 270 can be configured to control the load driver 245 to turn on the load.

At this time, the load can be a motor, a magnetron, or a heater.

That is, in response to the driving mode starting, the second processor 270c can be configured to turn on the motor, magnetron, or heater.

Next, the second processor 270c can be configured to perform a first operation according to the driving mode (S920).

For example, the second processor 270c can load first script data (612 in FIG. 6) among a plurality of scripts stored in the second memory 240, and control to perform a first operation based on the first script data.

Next, the second processor 270c can determine whether update data for a second operation is received while performing the first operation in the driving mode (S925), and if not applicable, determine whether the first operation is completed (S943), and if applicable, load the second script data (614 in FIG. 6) previously stored in the second memory 240, and control to perform the second operation based on the second script data (S945).

Meanwhile, at step 925 (S925), in response to update data for the second operation being received while the first operation in the driving mode is being performed, the second processor 270c can control to store the update data received from the server 500 or the mobile terminal 600 in the second memory 240.

Next, the second processor 270c can determine whether the first operation is completed (S935), and if applicable, load the updated script data updated and stored in the second memory 240, and control to perform the updated second operation, based on the updated script data (S940).

For example, the first operation can be the operation of the water supply valve of the laundry treatment machine 200a, and the second operation performed in step S945 (S945) can be 10 times of forward rotation and 10 times of reverse rotation of the motor 231, and the updated second operation performed in step 940 (S940) can be 7 times of forward rotation and 7 times of reverse rotation of the motor 231.

Accordingly, it is possible to efficiently perform the driving mode, based on the updated data. As a result, it is possible to provide a personalized driving mode.

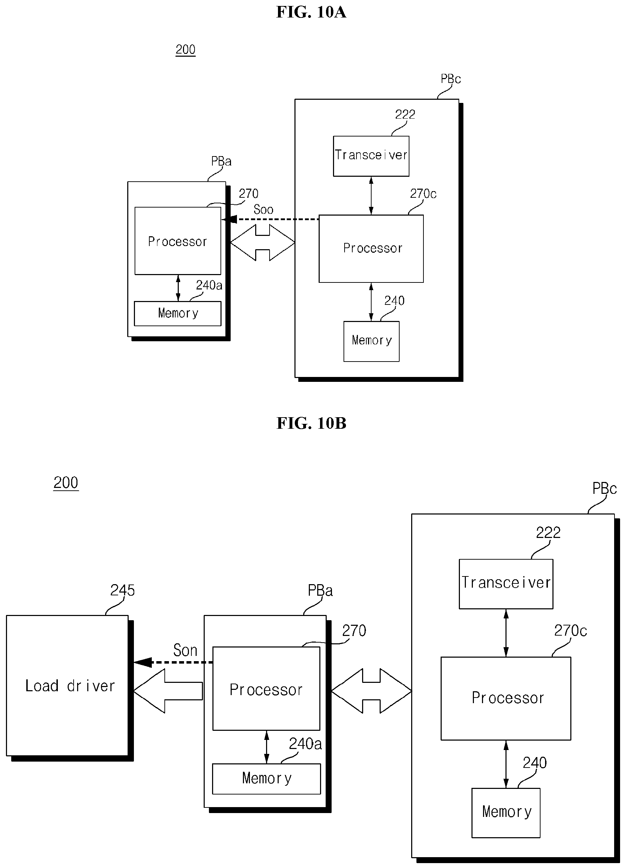

FIGS. 10A to 14C are diagrams referred to in the description of FIG. 9.

FIG. 10A illustrates that the second processor 270c transmits a load-on-signal Soo to the first processor 270, according to the start of the driving mode.

Correspondingly, the first processor 270 can be configured to turn on the load of the load driver 245.

FIG. 10B illustrates that the first processor 270 transmits a load-on-signal Son to the load driver 245. Accordingly, a motor, a magnetron, or a heater, which is a load, is turned on.

Next, the second processor 270c can be configured to perform the first operation during the driving mode.

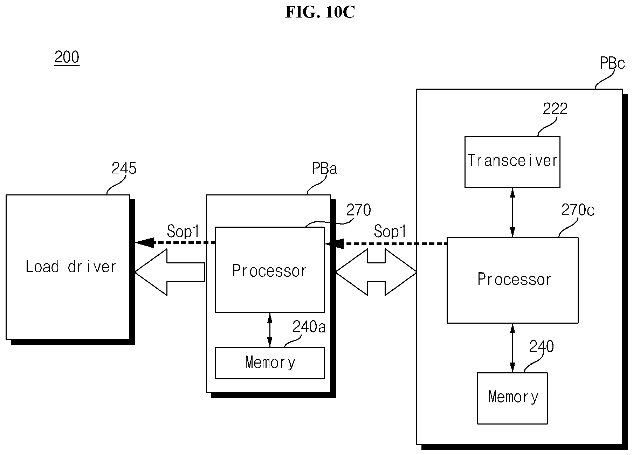

FIG. 10C illustrates that a control signal Sop1 for a first operation is transmitted from the second processor 270c to the first processor 270, based on loading of the first script data stored in the second memory 240.

Accordingly, the first processor 270 can transmit the control signal Sop1 for the first operation to the load driver 245.

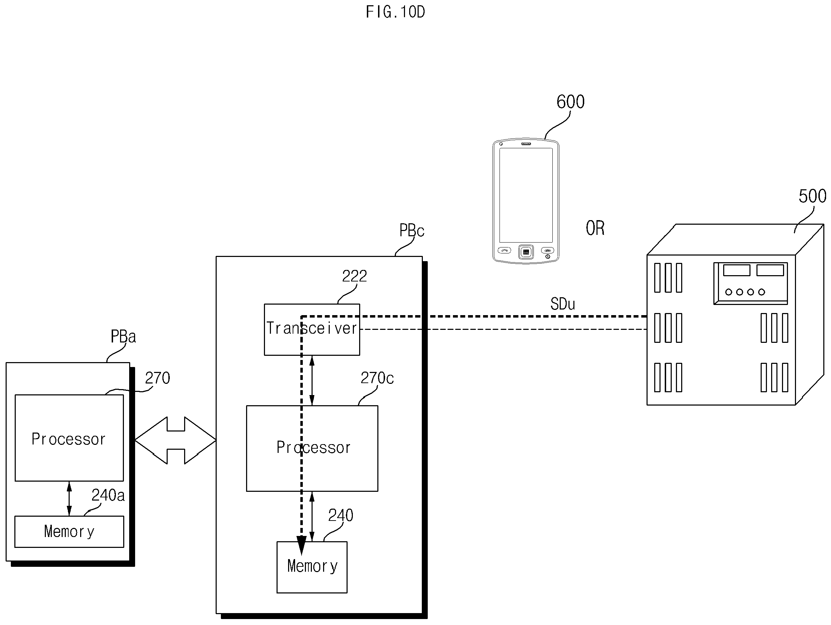

FIG. 10D illustrates that update data SDu related to a second operation after the first operation is received from the mobile terminal 600 or the server 500, during the first operation of the load driver 245.

The second processor 270c can be configured to store the update data received from the server 500 or the mobile terminal 600 in the second memory 240.

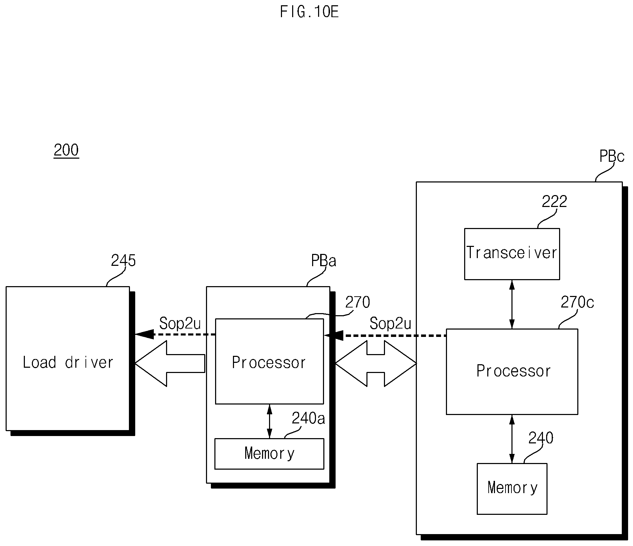

FIG. 10E illustrates that a control signal Sop2u for the second operation updated based on the loading of the updated script data stored in the second memory 240 is transmitted from the second processor 270c to the first processor 270 so as to perform the second operation after the first operation is completed.

Accordingly, the first processor 270 can transmit the updated control signal Sop2u for the second operation to the load driver 245.

As a result, based on the control signal Sop2u for the updated second operation, the load driver 245 performs the updated second operation.

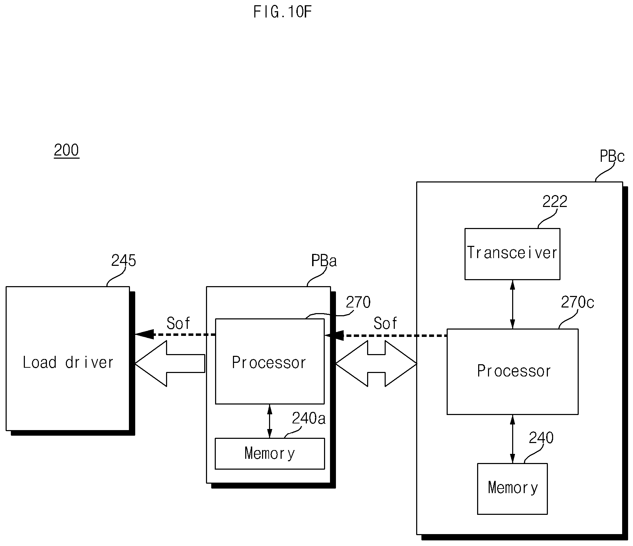

FIG. 10F illustrates that the second processor 270c transmits a load-off-signal Sof to the first processor 270 according to the completion of the driving mode, after the driving mode is completed.

Correspondingly, the first processor 270 can transmit a load-off-signal Sof to the load driver 245. As a result, the load driver 245 turns off the load based on the load-off-signal Sof.

That is, according to FIGS. 10A to 10F, in response to the driving mode starting, the second processor 270c can transmit a turn-on signal of the load or the valve (225 or 239) to the first processor 270, and in response to the driving mode being completed, transmit a turn-off signal of the load or valve (225 or 239) to the first processor 270. Accordingly, it is possible to efficiently perform the driving mode.

As described above, since the first processor 270 is in charge of load control and the second processor 270c is in charge of driving mode control, efficient execution of the driving mode and efficient update are possible. In particular, the update of the script-based driving mode can be performed immediately, during the operation of the driving mode.

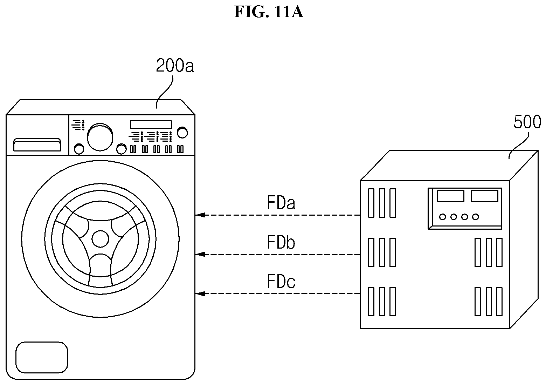

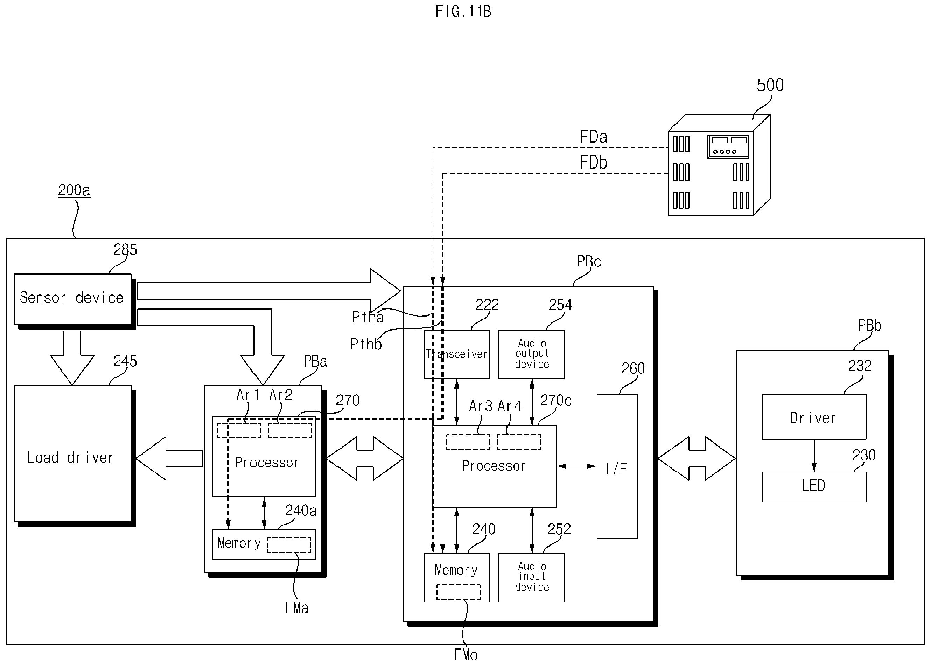

Meanwhile, FIGS. 11A to 14C are diagrams for explaining various examples of update or upgrade according to an embodiment of the present disclosure.

FIG. 11A illustrates that the server 500 transmits various data FDax, FDbx, FDc to the home appliance 200.

For example, among the various data FDax, FDbx, FDc received from the server 500, a first data FDa can be firmware update data or load control update data, and a second data FDb can be an application update data, and a third data FDc can be display update data.

Next, FIG. 11C is a diagram illustrating movement path of various data FDax, FDbx, FDc received by the home appliance 200.

Referring to the drawing, when the home appliance 200 receives first data FDa that is firmware update data or load control update data, the first data FDa can be stored in the memory 240a inside the first circuit PBa, via the transceiver 222 and the second processor 270c inside the second circuit PBc, and the first processor 270 inside the first circuit PBa, according to a first path Ptha.

Meanwhile, the first processor 270 inside the first circuit PBa can execute the firmware in the internal first area Ara, and execute the firmware-based load control or safety control in the internal second area Arb.

Meanwhile, when the home appliance 200 receives the second data FDb as application update data, the second data FDb can be stored in the memory 240 inside the second circuit PBc via the transceiver 222 and the second processor 270c inside the second circuit PBc according to a second path Pthb.

Similarly, when the home appliance 200 receives the operating system update data or the framework update data, the operating system update data or the framework update data can be stored in the memory 240 inside the second circuit PBc, via the transceiver 222 and the second processor 270c inside the second circuit PBc, according to the second path Pthb.

Meanwhile, when the home appliance 200 receives the third data FDc that is display update data, the third data FDc can be stored in the memory 240y inside the third circuit PBb, via the transceiver, the second processor 270c inside the second circuit PBc, and the third processor 27b inside the third circuit PBb, according to a third path Pthc 222.

As shown in the drawing, the first data FDa, which is firmware update data or load control update data, is stored in the memory 240a inside the first circuit PBa, and the application update data is separately stored in the memory 240 inside the second circuit PBc, so that data update can be performed efficiently.

In particular, the update of data stored in the memory 240 inside the second circuit PBc can be performed efficiently and frequently.

For example, when an application inside the memory 240 needs to be updated, only the application in the memory 240 inside the second circuit PBc, not the entire memory 240x of FIG. 4C, can be selectively updated, so that update can be performed efficiently.

In addition, the application can be updated during the driving mode of the home appliance 200, by separately storing application data in the memory 240 inside the second circuit PBc. Accordingly, the application update can be performed immediately.

Meanwhile, the firmware for load control or safety control is stored in a partial area Fma of the memory 240a in the first circuit PBa, the firmware for display control is stored in a partial area Fmb of the memory 240b in the third circuit PBb, and the operating system 710 and the like are stored in a partial area FMo of the memory 240 in the second circuit PBc, thereby efficiently performing firmware update or driving mode upgrade by separating the load control driven based on the firmware and the driving mode control executed based on the operating system 710.

FIG. 12A is a diagram illustrating a platform architecture executed by the second processor 270c inside the second circuit PBc.

Referring to FIG. 12A, the platform executed by the second processor 270c inside the second circuit PBc can be divided into a board support package layer (Ara), a framework layer (Arb) on the board support package layer (Ara), and an application layer (Arc) on the framework layer (Arb).

The board support package layer (Ara) can include a Real Time Operating System (RTOS) kernel 710, an Operating System Adaptation layer 715 executed in the Real Time Operating System kernel 710, a board support package driver 720, and a hardware abstraction layer 722.

The framework layer (Arb) can include an upgradable platform library 725, a common feature layer 730 on the upgradeable platform library 725, a service on the common feature layer 730 and an application program interface (API) layer 732, a living product service framework 742, a kitchen product framework 746, and an air product framework 748.

Here, the living product service framework 742 can include a laundry treatment machine framework, a dryer framework, a laundrying manager framework, and the like.

Meanwhile, the kitchen product framework 746 can include a cooking appliance framework, a water purifier framework, and the like.

The application layer Arc can include a system application 752 that is executed on the framework layer Arb, a data 754 related to a driving mode, or a download application 756.

As shown in the drawing, the second processor 270c can execute the operating system 710, execute a framework Arb on the operating system 710, and can execute a system application 752, a data 754 related to the driving mode, or a download application 756 on the framework Arb. Accordingly, the update of the framework Arb or the application can be performed easily and efficiently based on the operating system 710.

Meanwhile, according to an embodiment of the present disclosure, a common platform Arm applicable to various home appliances can be applied.

The operating system 710 and a part 725, 730, 732 of the framework Arb can correspond to the common platform Arm. Specifically, the operating system 710 can be commonly executed by other types of home appliances 200. Accordingly, various types of home appliances 200 can be operated based on the common platform. In addition, an update or upgrade can be efficiently performed by applying a common platform to the home appliance 200.

Meanwhile, other part 742, 746, 748 of the framework Arb, the system application 752, the data 754 related to the driving mode, and the download application 756 can correspond to a variable platform. Accordingly, the update of the variable platform or the upgrade of the driving mode can be efficiently performed.

As shown in drawing, the entire board support package layer Ara including the real-time operating system kernel 710, and a part, among the framework layer Arb, excluding the living product service framework 742, the kitchen product framework 746, and the air product framework 748 can be set as a common platform Arm applicable to various home appliances.

Accordingly, various types of home appliances 200 can be operated based on the common platform Arm. In addition, the update can be efficiently performed by applying the common platform Arm to the home appliance 200.

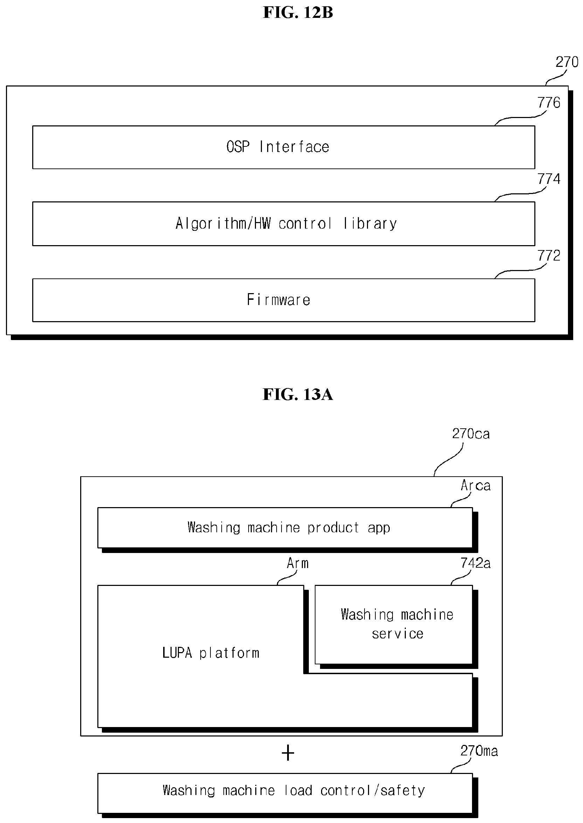

FIG. 12B is a diagram illustrating a platform architecture executed in the first processor 270 inside the first circuit PBa.

Referring to drawing, the first processor 270 inside the first circuit PBa can execute an interface 776 for communication with the third presser 270c, a firmware 772, and a library 774 for load control or driving mode control that is executed on the firmware 772.

Thus, the update of the firmware or the upgrade of the driving mode can be efficiently performed by separating the load control driven based on the firmware and the driving mode control executed based on the operating system.

FIGS. 13A to 13D are diagrams illustrating a platform architecture in various home appliances.

FIG. 13A shows the platform architecture of the laundry treatment machine.

Referring to FIG. 13A, a second processor 270ca in the laundry treatment machine 200a can execute a common platform Arm including an operating system and a framework, a laundry treatment machine service framework 742a, and a laundry treatment machine-related application Area on the common platform Arm.

Meanwhile, a first processor 270ma inside the laundry treatment machine 200a can execute laundry treatment machine load control or laundry treatment machine safety control on firmware.

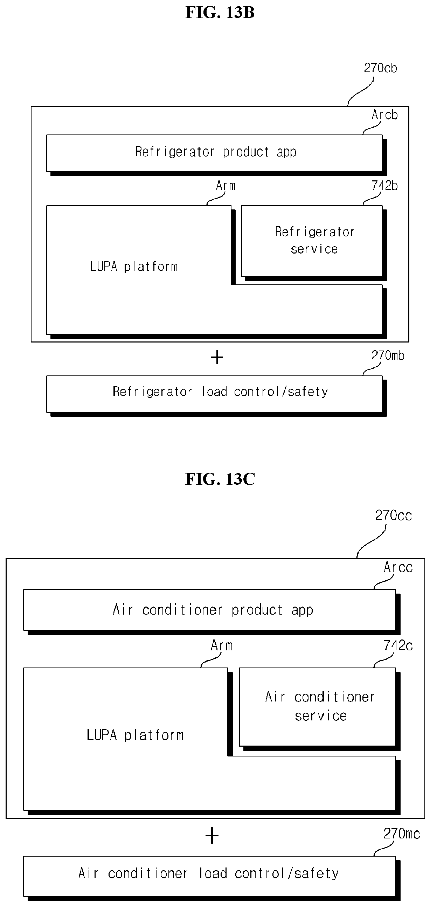

FIG. 13B shows the platform architecture of the refrigerator.

Referring to FIG. 13B, a second processor 270cb inside the refrigerator 200b can execute a common platform Arm including an operating system and a framework, a refrigerator service framework 742b, and a refrigerator related application Arcb on the common platform Arm.

Meanwhile, a first processor 270mb in the refrigerator 200b can execute refrigerator load control or refrigerator safety control on firmware.

FIG. 13C shows a platform architecture of the air conditioner.

Referring to FIG. 13C, a second processor 270cc inside the air conditioner 200c can execute a common platform Arm including an operating system and framework, an air conditioner service framework 742c, and an air conditioner related application Arcc on the common platform Arm.

Meanwhile, a first processor 270mc inside the air conditioner 200c can execute air conditioner load control or air conditioner safety control on the firmware.

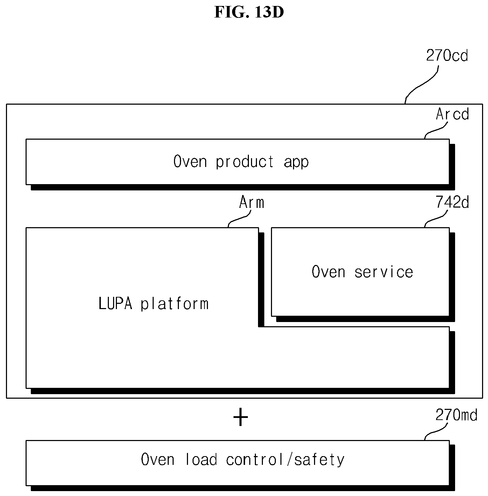

FIG. 13D shows a platform architecture of a cooking appliance.

Referring to FIG. 13D, a second processor 270cd inside the cooking appliance 200d can execute a common platform Arm including an operating system and a framework, a cooking appliance service framework 742d, and a cooking appliance-related application Arcd on the common platform Arm.

Meanwhile, a first processor 270md inside the cooking appliance 200d can execute the cooking appliance load control or the cooking appliance safety control on the firmware.

Referring to FIGS. 13A to 13D, since various types of home appliances 200 can be operated based on a common platform Arm, update can be efficiently performed. In addition, during the driving mode, update is performed based on received update data and updated operation can be performed quickly.

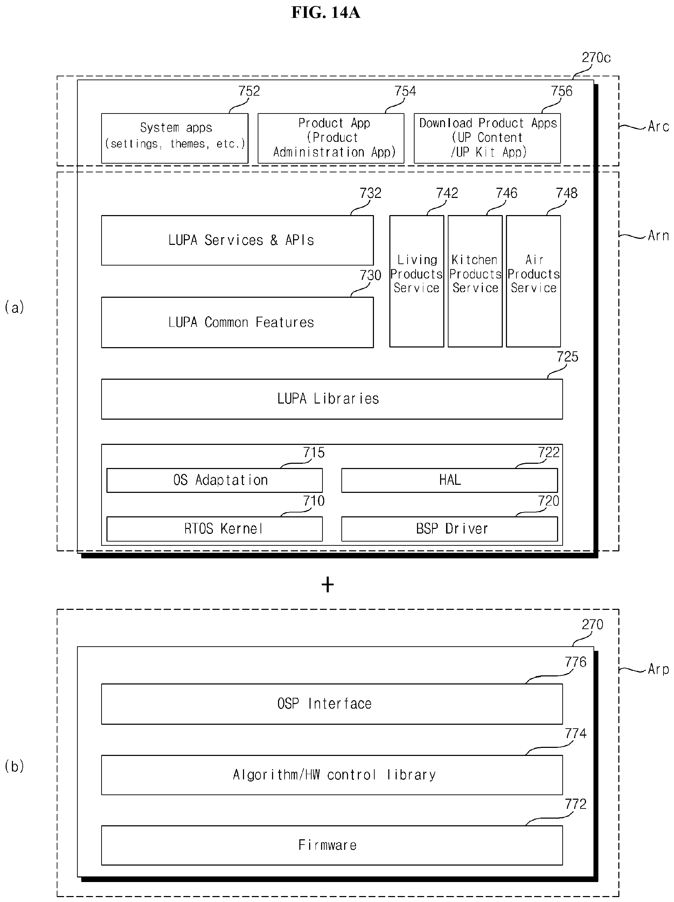

FIG. 14A is a diagram for dividing a software update area and a firmware update area and the first processor 270, among platforms executed by the second processor 270c.

Referring to FIG. 14A, the platform executed by the second processor 270c inside the second circuit PBc can be divided into a board support package layer Ara including an operating system, a framework layer Arb on the board support package layer Ara, and an application layer Arc on the framework layer Arb.

In the second processor 270c, an area where software over-the-air SOTA) is possible can be the application layer Arc, and an area Arn where firmware over the air (FOTA) is possible can be the board support package layer Ara and the framework layer Arb.

Meanwhile, in the first processor 270, there is no area where software update is possible, and the area Arp where the firmware update is possible can be an interface 776 for communication with the third processor 270c, the firmware 772, and the library 774.

As shown in FIG. 14A, the software update can be performed more efficiently and frequently by separating the software update area and the firmware update area.

Examples of the software update can be an update of a laundry process application, an enhanced dehydration application, an automatic detergent input application, a sound source theme application, a background theme application, and the like.

The software update can be an update based on a user's selection using the mobile terminal 600 or an update provided by a manufacturer.

Meanwhile, it is preferable that the firmware update is performed intermittently in comparison with a software update, and can be, for example, an operating system update, a framework update, a firmware update, a load control algorithm update, a safety control algorithm update, and the like.

Meanwhile, the operating system 710 or the framework Arb can be updated based on the firmware update data received from the server 500 or the mobile terminal 600, and the system application 752, the data 754 related to the driving mode, or the download application 756 can be updated based on the firmware update data or software update data received from the server 500 or the mobile terminal 600. Thus, the update or upgrade can be efficiently performed by separating the firmware update and the software update.

Meanwhile, the second processor 270c can be configured to perform the update of the operating system 710 and the firmware update of the first circuit PBa independently. Accordingly, the update of the operating system 710 and the update of the firmware of the first circuit PBa can be efficiently performed.

Meanwhile, when the update data of the operating system 710 and the firmware update data of the first circuit PBa are received, the firmware of the first circuit PBa can be updated after the operating system 710 is updated. Thus, the update of the firmware of the first circuit PBa can be performed stably and efficiently by performing the update of the operating system 710 first.

Meanwhile, the first circuit part PBa or the third circuit part PBb can be updated, based on the firmware update data received from the server 500 or the mobile terminal 600, and the second circuit PBc can be updated based on the firmware update data or software update data received from the server 500 or the mobile terminal 600. Thus, the update of firmware or the upgrade of driving mode can be performed efficiently by separating the load control driven based on the firmware and the driving mode control executed based on the operating system 710.

Meanwhile, when the transceiver 222 receives the firmware update data from the server 500 or the mobile terminal 600, the second processor 270c can control the firmware update data to be transmitted to the memory 240a in the first circuit PBa, and the memory 240a in the first circuit PBa can update the firmware based on the firmware update data. Accordingly, the firmware update can be efficiently performed.

Meanwhile, the memory 240a inside the first circuit PBa can not update the firmware during the driving mode, but can update firmware after the driving mode is terminated. Accordingly, the firmware update can be stably performed.

Meanwhile, when the transceiver 222 receives the software update data from the server 500 or the mobile terminal 600, the second processor 270c is configured to transmit the software update data to the memory 240 inside the second circuit PBc, and the memory 240 inside the second circuit PBc can update the application based on the software update data. Accordingly, the software update can be efficiently performed.

Meanwhile, the memory 240 inside the second circuit PBc can update application excluding the operating system 710 and the framework Arb among software, during the driving mode. Accordingly, the application update can be performed immediately.

Meanwhile, the memory 240 inside the second circuit PBc can not upgrade a new driving mode during the driving mode, and can upgrade the new driving mode after the driving mode is terminated. Accordingly, the new driving mode can be upgraded stably.

Meanwhile, the memory 240 inside the second circuit PBc can not update the operating system 710 or the framework Arb during the driving mode, but can update the operating system 710 or the framework Arb after the driving mode is terminated. Accordingly, the update of the operating system 710 or framework Arb can be performed stably.

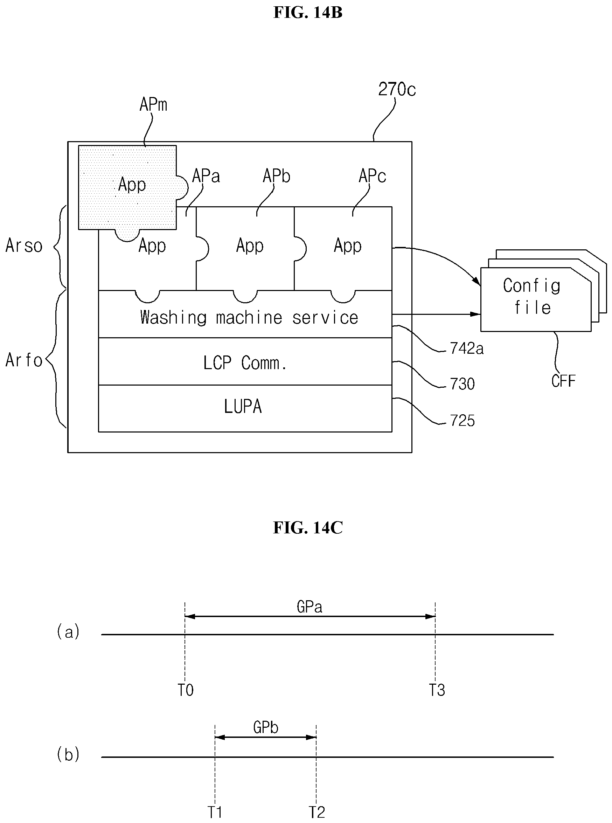

FIG. 14B is a diagram illustrating a software update in the second processor 270c inside the laundry treatment machine 200a.

Referring to FIG. 14B, the second processor 270c inside the laundry treatment machine 200a can execute an upgradable platform library 725 inside a common platform that includes an operating system, a common functional layer 730 on the upgradeable platform library 725, a laundry treatment machine service framework 742a on the common functional layer 730, and a plurality of laundry treatment machine-related applications APa, APb, APc on the laundry treatment machine service framework 742a.

In order to update the first laundry treatment machine-related application APa among the first to third laundry treatment machine-related applications APa, APb, APc, application update data is received from the server 500 or the like.

In this case, the application update data can be a fourth laundry treatment machine-related application APm for replacing a first laundry treatment machine-related application APa.

Accordingly, instead of the first laundry treatment machine-related application APa, the fourth laundry treatment machine-related application APm can be easily replaced and executed.

Meanwhile, the second processor 270c according to the present disclosure performs super-loop dependency separation for blocking for each function, and performs an event-driven inter-processor communication to minimize processor occupancy.

Meanwhile, the second processor 270c according to the present disclosure can communicate with the first processor 270 or the third processor 270b based on a variable packet method.

Meanwhile, the first processor 270 can periodically transmit sensing data sensed by the load driver 245 or the like to the second processor 270c through the inter-processor communication.

In this case, it is preferable that the first processor 270 transmits the sensing data to the second processor 270c through the inter-processor communication, only when there is a change in the sensing data by a certain value or more.

In addition, the first processor 270 can compress and serialize the sensing data instead of raw data, and transmit it to the second processor 270c.

Accordingly, the second processor 270c minimizes communication between the first processor 270 or the third processor 270b, thereby enabling efficient operation.

Specifically, the second processor 270c can perform a remote procedure call communication, which is an example of inter-processor communication, rather than a low-speed communication such as UART or SPI, in which high-speed communication is difficult due to noise or interference, thereby enabling high-speed communication.

FIG. 14C is a diagram illustrating a software update interval and a firmware update interval.

Referring to FIG. 14C, it is preferable that a reception interval of the software update data received from the server 500 or the mobile terminal 600 is shorter than a reception interval of the firmware update data.

That is, the software update interval can be GPb between T1 and T2, and the firmware update interval can be GPa, between T0 and T4, greater than GPb. Accordingly, the software update can be performed frequently and simply.

Meanwhile, it is preferable that the update interval GPb of the second circuit PBc is shorter than the update interval GPa of the first circuit PBa or the update interval of the third circuit PBb. Accordingly, the update of the second circuit PBc can be performed frequently and efficiently.

Meanwhile, when the home appliance 200 is a first product, for example, a laundry treatment machine 200a, the second processor 270c executes the operating system 710, executes the common framework Arb in a part on the operating system 710, executes the first product framework 742a, which is a laundry treatment machine service framework, in another part on the operating system 710, and executes a first product-related application, for example, a laundry treatment machine-related application, on the common framework Arb and the first product framework 742a.

Meanwhile, when the home appliance 200 is a second product, i.e., the air conditioner 200c, the second processor 270c can execute the operating system 710, execute the common framework Arb in a part on the operating system 710, execute the second product framework 742c which is an air conditioner service framework in another part on the operating system 710, and can execute an application related to a second product, for example, to an air conditioner on the common framework Arb and the second product framework 742c. Accordingly, the laundry treatment machine 200a and the air conditioner 200c can be operated based on a common platform.

Meanwhile, the second processor 270c can be configured to update the first product-related application during operation of the first product, and can be configured to update the operating system 710 or the common framework Arb, after the operation of the first product is terminated.

Specifically, the second processor 270c can be configured to update a laundry treatment machine-related application during operation of the laundry treatment machine 200a, and can be configured to update the operating system 710 or the common framework Arb after the operation of the laundry treatment machine 200a is terminated. Accordingly, the update of the laundry treatment machine-related application can be performed immediately, thereby stably updating the operating system 710 or the framework Arb.

Meanwhile, even when the common platform (Arm) of FIGS. 12A to 14C is applied to a home appliance, as described in FIGS. 5 to 11B and the like, during the first operation of the driving mode, when the data for the second operation after the first operation is updated and stored in the second memory 240, the second processor 270c can be configured to perform the updated second operation, based on the data for the second operation updated in the second memory 240 after the first operation in the driving mode is completed.

Accordingly, during the driving mode operation, it is possible to perform an update based on the received update data and quickly perform the updated operation. In addition, it is possible to perform the update efficiently. Furthermore, the driving mode can be efficiently performed due to the real-time update of the driving mode.

As described above, in accordance with an aspect of the present disclosure, a home appliance can include: a first circuit comprising a first memory and a first processor configured to perform load control based on data stored in the first memory; and a second circuit comprising a second memory to store data for a driving mode and a second processor configured to perform the driving mode based on the data stored in the second memory, wherein during a first operation in the driving mode, in response to data for a second operation after the first operation being updated and stored in the second memory, the second processor is configured to perform the updated second operation, based on the data for the second operation updated in the second memory, after the first operation in the driving mode is completed. Accordingly, it is possible to perform an update based on the received update data and quickly perform the updated operation, during the driving mode operation. In addition, it is possible to perform the update efficiently. Furthermore, the driving mode can be efficiently performed due to the real-time update of the driving mode.

Meanwhile, the second processor is configured to control a load or a valve to perform the first operation, based on first script data stored in the second memory, and control the load or the valve to perform the second operation, based on updated second script data, in response to the second script data stored in the second memory being updated during the first operation. Accordingly, it is possible to perform an update based on the received update data and quickly perform the updated operation, during the driving mode operation.

Meanwhile, in response to first application data being updated and stored in the second memory during operation of the driving mode, the second processor is configured to update the first application, based on the updated first application data during the operation of the driving mode. Accordingly, the first application can be updated during the driving mode operation.

Meanwhile, the second memory further stores firmware data, and in response to firmware update data being received and stored in the second memory during operation of the driving mode, the second processor is configured to perform firmware update, after the operation of the driving mode is completed. Accordingly, it is possible to stably perform the firmware update. Furthermore, it is possible to perform the update efficiently.

Meanwhile, the first memory further stores firmware data, and in response to firmware update data being received and stored in the first memory during operation of the driving mode, the first processor is configured to perform firmware update, after the operation of the driving mode is completed. Accordingly, it is possible to stably perform the firmware update.

Meanwhile, the load control includes a turn-on or turn-off control of a load, or a turn-on or turn-off control of a valve, and the data for the driving mode includes data for operation control of the load or valve. Accordingly, it is possible to perform an update based on the received update data and quickly perform the updated operation, during the driving mode operation.

Meanwhile, the load control includes a turn-on or turn-off control of a load, or a turn-on or turn-off control of a valve, and the data for the driving mode includes data for operation control of the load or valve. Accordingly, it is possible to stably perform the driving mode based on the sensing data.

Meanwhile, the second processor is configured to transmit a load-on-signal to the first processor in response to the driving mode starting, and transmit a load-off-signal to the first processor in response to the driving mode being terminated. Accordingly, it is possible to efficiently perform the driving mode.

Meanwhile, the second memory has a plurality of operation data according to the driving mode, and the plurality of operation data includes script data. Accordingly, it is possible to efficiently perform the update.

Meanwhile, part of the plurality of script data is updated, and other part is not updated. Accordingly, it is possible to efficiently perform the update.

Meanwhile, part of the plurality of script data includes complex condition data, variable data, and function call data related to the driving mode. Accordingly, it is possible to efficiently perform the update.

Meanwhile, it is preferable that the capacity of the second memory is greater than that of the first memory. Accordingly, the update can be efficiently performed, and furthermore, the driving mode can be efficiently performed.

Meanwhile, the second circuit can further include a transceiver to perform wireless communication with a server or a mobile terminal. Accordingly, update data can be received through the transceiver disposed in the second circuit.

Meanwhile, the home appliance according to an embodiment of the present disclosure can further include a third circuit having a third processor for controlling a light emitting diode or a display. Accordingly, the operation of the home appliance can be displayed through the third circuit.

Meanwhile, the second processor is configured to control the driving mode based on an operating system, and perform update or upgrade, based on update data received from an external server or mobile terminal. Accordingly, it is possible to efficiently perform update or upgrade while efficiently performing the driving mode.

Meanwhile, the second processor is configured to execute the operating system, execute a framework on the operating system, and execute a system application, data related to the driving mode, or a download application on the framework. Accordingly, it is possible to simply and efficiently update of framework or application, based on the operating system.

Meanwhile, part of the operating system and the framework corresponds to a common platform. Accordingly, various types of home appliances can be operated based on a common platform. In addition, the update or upgrade can be performed efficiently by applying a common platform to the home appliances.

A home appliance according to another embodiment of the present disclosure can include a first circuit comprising a first memory and a first processor configured to perform a turn-on or turn-off control of a load or valve based on data stored in the first memory; and a second circuit comprising a second memory to store data for a driving mode of the load or valve, and a second processor configured to perform the driving mode based on the data stored in the second memory, wherein during a first operation in the driving mode, in response to data for a second operation after the first operation being updated and stored in the second memory, the second processor is configured to perform the updated second operation, based on the data for the second operation updated in the second memory, after the first operation in the driving mode is completed. Accordingly, it is possible to perform an update based on the received update data and quickly perform the updated operation, during the driving mode operation. In addition, it is possible to perform the update efficiently. Furthermore, the driving mode can be efficiently performed due to the real-time update of the driving mode.

Meanwhile, the second processor is configured to control the load or the valve to perform the first operation, based on first script data stored in the second memory, and control the load or the valve to perform the second operation, based on updated second script data, in response to the second script data stored in the second memory being updated during the first operation. Accordingly, it is possible to perform an update based on the received update data and quickly perform the updated operation, during the driving mode operation.

Meanwhile, the second processor is configured to receive sensing data from the first processor or a sensor device during operation of the driving mode, and perform the driving mode, based on the sensing data. Accordingly, it is possible to stably perform the driving mode based on the sensing data.

Meanwhile, the second processor is configured to transmit a turn-on signal of the load or the valve to the first processor in response to the driving mode starting, and transmit a turn-off signal of the load or the valve to the first processor in response to the driving mode being terminated. Accordingly, it is possible to efficiently perform the driving mode.

A method of operating a home appliance according to an embodiment of the present disclosure includes turning on a load according to a start of a driving mode; performing a first operation of the driving mode; storing update data for a second operation in response to update data for the second operation being received during the first operation of the driving mode; and performing an updated second operation, based on the update data, after the first operation is completed. Accordingly, it is possible to perform an update based on the received update data and quickly perform the updated operation, during the driving mode operation. In addition, it is possible to perform the update efficiently. Furthermore, the driving mode can be efficiently performed due to the real-time update of the driving mode.

Although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the scope of the present disclosure.

## Claims

1. A home appliance (200) comprising:
a first circuit (PBa) comprising a first memory (240a) and a first processor (270) configured to perform load control based on data stored in the first memory; and
a second circuit (PBc) comprising a second memory (240) to store data for a driving mode and a second processor (270c) configured to perform the driving mode based on the data stored in the second memory,
wherein during a first operation in the driving mode, in response to data for a second operation after the first operation being updated and stored in the second memory, the second processor (270c) is configured to perform the updated second operation, based on the data for the second operation updated in the second memory, after the first operation in the driving mode is completed.

2. The home appliance of claim 1, wherein the second processor (270c) is configured to:
control a load or a valve to perform the first operation, based on first script data stored in the second memory, and
control the load or the valve to perform the second operation, based on updated second script data, in response to the second script data stored in the second memory being updated during the first operation.

3. The home appliance of any one of claims 1 to 2, wherein in response to first application data being updated and stored in the second memory during operation of the driving mode, the second processor (270c) is configured to update the first application, based on the updated first application data during the operation of the driving mode.

4. The home appliance of any one of claims 1 to 3, wherein the second memory (240) further stores firmware data,
wherein in response to firmware update data being received and stored in the second memory during operation of the driving mode, the second processor is configured to perform firmware update, after the operation of the driving mode is completed.

5. The home appliance of any one of claims 1 to 4, wherein the first memory (240a) further stores firmware data,
wherein in response to firmware update data being received and stored in the first memory during operation of the driving mode, the first processor (270) is configured to perform firmware update, after the operation of the driving mode is completed.

6. The home appliance of any one of claims 1 to 5, wherein the load control includes a turn-on or turn-off control of a load, or a turn-on or turn-off control of a valve,
wherein the data for the driving mode includes data for operation control of the load or valve.

7. The home appliance of any one of claims 1 to 6, wherein the second processor (270c) is configured to receive sensing data from the first processor or a sensor device during operation of the driving mode, and
perform the driving mode based on the sensing data.

8. The home appliance of any one of claims 1 to 7, wherein the second processor (270c) is configured to transmit a load-on-signal to the first processor in response to the driving mode starting, and
transmit a load-off-signal to the first processor in response to the driving mode being terminated.

9. The home appliance of any one of claims 1 to 8, wherein the second memory has a plurality of operation data according to the driving mode,
wherein the plurality of operation data includes script data.

10. The home appliance of claim 9, wherein part of the plurality of script data is updated, and other part is not updated.

11. The home appliance of claim 7, or any one of claims 8 to 10 in combination with claim 7, wherein part of the plurality of script data includes complex condition data, variable data, and function call data related to the driving mode.

12. The home appliance of any one of claims 1 to 11, wherein the second processor (270c) is configured to control the driving mode based on an operating system, and perform update or upgrade, based on update data received from an external server or mobile terminal.

13. The home appliance of claim 12, wherein the second processor (270c) is configured to execute the operating system, execute a framework on the operating system, and execute a system application, data related to the driving mode, or a download application on the framework.

14. The home appliance of claim 13, wherein part of the operating system and the framework corresponds to a common platform.

15. A method of operating a home appliance, the method comprising:
turning on a load according to a start of a driving mode;
performing a first operation of the driving mode;
storing update data for a second operation in response to update data for the second operation being received during the first operation of the driving mode; and
performing an updated second operation, based on the update data, after the first operation is completed.
